# EUROPÄISCHE PATENTANMELDUNG

(11) **EP 4 344 771 A1**
(43) Veröffentlichungstag der Anmeldung: **03.04.2024**
(21) Anmeldenummer: 23208174.5
(22) Anmeldetag: 23.06.2021
(51) Int. Cl.: B01J 19/08

(54) **PLASMALYSEVORRICHTUNG ZUM KORONALADUNGSINDUZIERTEN SPALTEN VON WASSERSTOFFENTHALTENDEM GAS**

(30) Priorität: 26.06.2020 DE 102020116950
(62) Teilanmeldung aus: 21739582.1
(71) Anmelder: Graforce GmbH, 12489 Berlin (DE)
(72) Erfinder: Hanke, Jens, 12489 Berlin (DE); Knist, Sascha, 12489 Berlin (DE)
(74) Vertreter: Eisenführ Speiser

(57) **Zusammenfassung**

Die Erfindung betrifft das koronaentladungsinduzierte Spalten von wasserstoffenthaltenden Gasen (10) in molekularen Wasserstoff (12) und wenigstens ein Beiprodukt (14") oder das Herstellen von molekularem Wasserstoff und wenigstens ein Beiprodukt oder das Herstellen von Folgeprodukten aus dem molekularen Wasserstoff und/oder dem wenigstens einem Beiprodukt. Hierfür wird wasserstoffenthaltendes Gas (10) über eine Gaszuleitung (20) in einen gasdichten Reaktionsraum (18") mit genau einer Plasmaelektrode (22") eingeführt. Der gasdichte Reaktionsraum (18") ist von einer Wand (28) umschlossen, die ausgebildet ist die Plasmaelektrode (22") gegenüber einer Außenseite der Wand (28) elektrisch zu isolieren. Die Plasmaelektrode (22") ist mit einem Hochfrequenzgenerator (200) verbunden, der hochfrequente Wechselspannung bereitstellt und erzeugt Koronaentladungen (32) im Reaktionsraum (18") mittels der hochfrequenten Wechselspannung. Hierdurch wird das wasserstoffenthaltende Gas (10) in molekularen Wasserstoff (12) und wenigstens ein Beiprodukt (14") gespalten. Der molekulare Wasserstoff (12) wird aus dem Reaktionsraum (18") mittels einer Gasableitung (24) abgeführt. Das wasserstoffenthaltende Gas (10) kann beispielsweise Methan, Biogas, Erdgas, Schwefelwasserstoff, oder in den gasförmigen Aggregatzustand überführtes Cyclohexan, Heptan, Toluol, Benzin, JP-8 oder Diesel enthalten.

## Beschreibung

Die Erfindung betrifft eine Plasmalysevorrichtung zum koronaentladungsinduzierten Spalten von wasserstoffenthaltendem Gas in molekularen Wasserstoff und wenigstens ein Beiprodukt bzw. Nebenprodukt, sowie ein Plasmalysesystem mit wenigstens zwei solcher Plasmalysevorrichtungen und ein Verfahren zum koronaentladungsinduzierten Spalten von wasserstoffenthaltenden Gas in molekularen Wasserstoff und wenigstens ein Beiprodukt bzw. zum Herstellen von molekularem Wasserstoff und wenigstens einem Beiprodukt.

Es ist bekannt Kohlenwasserstoffe, wie beispielsweise Methan, Erdgas, Biogas oder Schweröl, mittels des Kvaerner-Verfahrens in einem Plasmabrenner bei etwa 1600 °C in Aktivkohle und Wasserstoff zu trennen.

Ferner ist aus Gui-Bing Zhao et al., "Methane conversion in pulsed corona discharge reactors", Chemical Engineering Journal 125 (2006) 67-79, für den Labormaßstab bekannt, Methan in einem co-axialen gepulsten Koronaentladungsreaktor in verschiedene Kohlenstoff und Wasserstoff enthaltende Gase, wie beispielsweise Ethin, Ethan und Ethen umzuwandeln. Der Koronaentladungsreaktor verwendet einen Edelstahldraht als Anode und eine die Anode umgebende Edelstahlkathode oder Niobkathode. Die Anode ist entlang einer zentralen Achse der Kathode angeordnet. Die Anode ist positiv geladen und die Kathode geerdet. Gas, das durch die Kathode fließt wird durch eine Hochspannungsentladung von der Anode in ein Plasma umgewandelt. Der Koronaentladungsreaktor wird mit Spannungen zwischen 10 kV und 25 kV bei Pulsfrequenzen zwischen 0 und 1000 Hz betrieben.

Hier setzt die Erfindung an, die eine verbesserte Plasmalysevorrichtung zum koronaentladungsinduzierten Spalten von wasserstoffenthaltenden Gasen in molekularen Wasserstoff und wenigstens ein Beiprodukt oder zum Herstellen von molekularem Wasserstoff und wenigstens einem Beiprodukt bereitstellt.

Gemäß einem ersten Aspekt betrifft die Erfindung eine Plasmalysevorrichtung zum koronaentladungsinduzierten Spalten von wasserstoffenthaltenden Gasen in molekularen Wasserstoff und wenigstens ein Beiprodukt oder zum Herstellen von molekularem Wasserstoff und wenigstens einem Beiprodukt. Die Plasmalysevorrichtung enthält einen gasdichten Reaktionsraum, eine Gaszuleitung für das wasserstoffenthaltende Gas in den Reaktionsraum, genau eine Plasmaelektrode zum Erzeugen von Koronaentladungen im Reaktionsraum mittels einer hochfrequenten Wechselspannung und eine Gasableitung für den molekularen Wasserstoff aus dem Reaktionsraum. Der gasdichte Reaktionsraum ist von einer Wand umschlossen, die ausgebildet ist die Plasmaelektrode gegenüber einer Außenseite der Wand elektrisch zu isolieren Die Plasmaelektrode ist mit einem Hochfrequenzgenerator zum Erzeugen der hochfrequenten Wechselspannung verbunden.

Die Erfindung nutzt eine sogenannte Koronaentladung, insbesondere auf einem flachen Ende der Plasmaelektrode oder auf der Spitze der Plasmaelektrode, beispielsweise auf einer Gas-Düsenspitze der Plasmaelektrode, die das wasserstoffenthaltende Gas in den Reaktionsraum leitet. Bei der Koronaentladung wird bevorzugt ein nicht-thermisches Plasma erzeugt. Dies kann den Energieverbrauch beim Spalten von wasserstoffenthaltenden Gasen verringern, da weniger Energie in nicht effizient weiterverwendbare thermische Energie umgewandelt wird. Somit können die Kosten für die Herstellung von molekularem Wasserstoff und der Vorrichtung oder Anlage zum Herstellen des molekularen Wasserstoffs reduziert werden.

Ferner kann ein höherer Wirkungsgrad als beim Verwenden von Mikrowellenplasmaverfahren wie z.B. dem Kvaerner-Verfahren erreicht werden, die mit einem Wirkungsgrad von ca. 60 Prozent arbeiten. Es kann beispielsweise mit der Plasmalysevorrichtung ein Wirkungsgrad von 85 % erreicht werden. Hierbei ist der Wirkungsgrad gemeint, der sich auf die benötigte elektrische Leistung zum Erzeugen von molekularem Wasserstoff bezieht. Beispielsweise kann 1 kg molekularer Wasserstoff mit der Plasmalysevorrichtung unter Einsatz von 10 kWh hergestellt werden. Das Kvaerner-Verfahren benötigt hierfür beispielsweise 13,75 kWh bzw. 1,25 kWh/m³ molekularem Wasserstoff.

Im Gegensatz zu den Mikrowellenplasmaverfahren, ist es ferner für das Herstellen des molekularen Wasserstoffs mit der Plasmalysevorrichtung nicht erforderlich unter reduziertem Druck zu arbeiten.

Um die Plasmaelektrode gegenüber der Außenseite der Wand des Reaktionsraums elektrisch zu isolieren, ist die Wand so ausgebildet, dass der elektrische Fluss durch die Oberfläche der Wand von Außen zur Plasmaelektrode Null ist. Hierfür hat eine Innenseite der Wand gegenüber der Plasmaelektrode ein Floating-Potential. Dies ermöglicht es ein stärkeres elektrisches Feld direkt an der Plasmaelektrode auszubilden. Dadurch kann das wasserstoffenthaltende Gas besser gespalten werden. Die Wand kann beispielsweise eine nicht-geerdete, nicht-metallische Wand sein. Alternativ kann die Wand auch eine metallische Wand mit einer nicht-metallischen Isolierung auf deren Innenseite gegenüber der Plasmaelektrode sein, z.B., mit einer nicht-metallischen Isolationsbeschichtung.

Die Erfindung hat erkannt, dass eine Koronaentladung vorteilhaft mit genau einer Plasmaelektrode erzeugt werden kann. Hierbei wird keine Gegenelektrode vorgesehen. Die Gegenelektrode kann spontan von Teilen der Innenseite der Wand des Reaktionsraums gebildet werden, so dass ein starkes elektrisches Feld im Reaktionsraum zwischen der Plasmaelektrode und Teilen der Innenseite der Wand des Reaktionsraums, an der Plasmaelektrode erzeugt wird. Das elektrische Feld kann jedoch auch ohne eine spontan gebildete Gegenelektrode eine Koronaentladung erzeugen. Da nur eine Plasmaelektrode verwendet wird, kann eine Verunreinigung und ein mögliches Zusetzen der Plasmaelektrode mit festem Beiprodukt bzw. Nebenprodukt reduziert werden. Ferner kann, da nur eine Plasmaelektrode verwendet wird ein Elektrodenmaterialabtrag verringert werden.

Der Erfindung liegt weiterhin die Erkenntnis zu Grund, dass über die Verwendung hochfrequenter Wechselspannung mit nur einer Plasmaelektrode, Plasmen von Koronaentladungen bei Atmosphärendruck gezündet und betrieben werden können. Ein Betrieb bei Atmosphärendruck kann die Kosten für Anlagen und Betrieb verringern. Zudem kann im Gegensatz zu einer Vorrichtung mit einer Gegenelektrode ein Plasmadurchbruch am Ende der Plasmaelektrode erzeugt werden.

Eine Koronaentladung kann in einem elektrischen Feld entstehen, das stark genug ist, um freie Elektronen und Ionen nach einer lonisation eines Atoms in einem Gas räumlich zu trennen, so dass diese nicht sofort rekombinieren. Dies kann auch genutzt werden, um verschiedene Atome in Molekülen voneinander zu trennen, indem die Bindungen zwischen diesen aufgebrochen werden. Diese Atome können dann miteinander zu neu bzw. anders zusammengesetzten Molekülen rekombinieren. Beispielsweise kann Methan in Kohlenstoffatome und Wasserstoffatome aufgespalten werden, die zu molekularem Wasserstoff und festen Kohlenstoffstrukturen rekombinieren können.

Eine Koronaentladung kann wie folgt ablaufen. Ein erstes freies Elektron kann durch Feldionisation erzeugt werden, wobei das freie Elektron und ein positives Ion entstehen. Hierbei wird durch ein starkes elektrisches Feld, zum Beispiel in der Nähe einer Elektrodenspitze, der Potentialverlauf für ein in einem Atom gebundenes Elektron so verändert, dass es die Potentialbarriere überwinden oder durchtunneln kann. Alternativ kann ein erstes freies Elektron auch erzeugt werden, wenn ein hochenergetisches Photon auf ein Atom trifft und mittels des photoelektrischen Effekts das Atom ionisiert, so dass das freie Elektron und ein positives Ion entstehen. Das hochenergetische Photon kann beispielsweise von einer Strahlungsquelle, z.B. einer UV-Strahlungsquelle, oder durch ein natürliches Ereignis, wie beispielsweise ein durch kosmische Strahlung erzeugtes Photon, bereitgestellt werden.

Das starke elektrische Feld beschleunigt die unterschiedlich geladenen Teilchen, d.h. das negativ geladene freie Elektron und das positiv geladene Ion, in unterschiedliche Richtungen und trennt sie somit räumlich voneinander. Das positiv geladene Ion kann Teil eines Moleküls mit mehreren Atomen sein, so dass das positiv geladene Molekül beschleunigt werden kann. Aufgrund der gleichen Ladungsmenge, jedoch einer geringeren Masse des Elektrons, wird dieses viel stärker als das positiv geladene Ion beschleunigt und kann, wenn es mit einem anderen Atom zusammenstößt, dieses ionisieren und ein weiteres freies Elektron erzeugen. Es können auch mehrere freie Elektronen mehrere Atome des Moleküls treffen, so dass das Molekül in seine Atome aufgespalten werden kann. Da jedes neue freie Elektron weitere freie Elektronen erzeugen kann, kann eine Elektronenlawine entstehen.

Ein Teil der freien Elektronen rekombiniert mit den positiv geladenen Ionen und erzeugt neutrale Atome unter Erzeugung eines hochenergetischen Photons, das wiederum weitere Atome ionisieren kann. Die Photonen sind als typisches Koronaleuchten erkennbar.

Die elektrische Feldstärke lässt in einer gewissen Entfernung zur Plasmaelektrode so stark nach, dass die Elektronen nicht mehr genug Energie haben, um weitere freie Elektronen und positiv geladene Ionen zu erzeugen. Dies begrenzt die Koronaentladung und stellt deren Außengrenze dar. Die positiv geladenen Ionen können mit Elektronen der Elektrode rekombinieren oder mit freien Elektronen. Ferner können Atome miteinander zu neu zusammengesetzten Molekülen rekombinieren.

Mit der erfindungsgemäßen Plasmalysevorrichtung können daher effizient größere Mengen an wasserstoffenthaltendem Gas bei geringeren Kosten in molekularen Wasserstoff und wenigstens ein Beiprodukt gespalten werden. Dies ermöglicht es also molekularen Wasserstoff und wenigstens ein Beiprodukt aus wasserstoffenthaltendem Gas herzustellen.

Das wasserstoffenthaltende Gas kann beispielsweise Methan enthalten. Zum Beispiel kann das wasserstoffenthaltende Gas über 75 % Methan, bevorzugt über 90 % Methan, beispielsweise zwischen 90% und 99 % Methan enthalten. Das Methan wird in der Koronaentladung in Wasserstoff und elementaren Kohlenstoff gespalten, insbesondere findet die chemische Reaktion n CH₄ -> n C (s) + 2n H₂ statt, wobei n C (s) verschiedene feste Kohlenstoffstrukturen enthalten kann, z.B. eine oder mehrere Kohlenstoffstrukturen Cₖ mit k kleiner oder gleich n. Kohlenstoffstrukturen können beispielsweise elementare Kohlenstoffpartikel, Kohlenstoffnanoröhren, Fullerene, Kohlenstoffnanokegel oder andere Kohlenstoffstrukturen sein. Die elementaren Kohlenstoffpartikel können beispielsweise eine Größe zwischen 50 µm und 180 µm haben. Es können sich auch Kohlenstoffschichten ausbilden. Dies ermöglicht ein effizientes Erzeugen von molekularem Wasserstoff und elementarem Kohlenstoff aus Methan.

Alternativ oder zusätzlich kann das wasserstoffenthaltende Gas Schwefelwasserstoff enthalten. Das wasserstoffenthaltende Gas kann beispielsweise bis zu 35 % Schwefelwasserstoff, zum Beispiel zwischen 0 % und 35 % Schwefelwasserstoff enthalten. Der Schwefelwasserstoff wird in der Koronaentladung in Wasserstoff und elementaren Schwefel gespalten, insbesondere findet die chemische Reaktion H₂S -> H₂ + S (s) statt. Dies ermöglicht ein effizientes Erzeugen von molekularem Wasserstoff und elementarem Schwefel aus Schwefelwasserstoff.

Das wasserstoffenthaltende Gas kann beispielsweise Erdgas sein. Erdgas kann beispielsweise die folgenden Stoffe enthalten:
- zwischen 30 % und 99 % Methan, z.B. zwischen 75 % und 99 % Methan, insbesondere zwischen 90 % und 99 % Methan,
- zwischen 0 % und 15 % Ethan, z.B. zwischen 1 % und 15 % Ethan, insbesondere zwischen 1 % und 3 % Ethan,
- zwischen 0 % und 10 % Propan, z.B. zwischen 1 % und 10 % Propan, insbesondere zwischen 0,3 % und 0,5 % Propan,
- zwischen 0 % und 1 % Butane, insbesondere zwischen 0,1 % und 0,2 % Butane,
- zwischen 0 % und 1 % Ethen,
- zwischen 0 % und 1 % Pentane, insbesondere zwischen 0,01 % und 0,03 % Pentane
- zwischen 0 % und 1 % Hexan, insbesondere zwischen 0,001 % und 0,02 % Hexan,
- zwischen 0 % und 35 % Schwefelwasserstoff,
- zwischen 0 % und 70 % Stickstoff, z.B. zwischen 0 % und 15 % Stickstoff, insbesondere zwischen 0,5 % und 1 % Stickstoff,
- zwischen 0 % und 10 % Kohlenstoffdioxid, insbesondere zwischen 0,1 % und 0,3 % Kohlenstoffdioxid.

Erdgas kann zusätzlich Spuren von Sauerstoff, z.B. zwischen 0,001 % und 0,01 % Sauerstoff enthalten. Erdgas kann auch Edelgase, wie Helium, Argon, Neon, Krypton oder Xenon, beispielsweise mit einem jeweiligen Mengenanteil zwischen 0 % und 15 % enthalten.

Das wasserstoffenthaltende Gas kann auch einen in den gasförmigen Aggregatzustand überführten bei Raumtemperatur flüssigen wasserstoffenthaltenden Stoff wie zum Beispiel Cyclohexan, Heptan, Toluol, Benzin, JP-8 oder Diesel enthalten. Der in den gasförmigen Aggregatzustand überführte wasserstoffenthaltende Stoff kann beispielsweise durch Zerstäuben und/oder Erhitzen in den gasförmigen Aggregatzustand überführt werden. Hierfür können beispielsweise ein Zerstäuber und/oder ein Heizelement vorgesehen sein, die die Flüssigkeit zerstäuben und/oder erhitzen können, um diese in den gasförmigen Aggregatzustand zu überführen. Der Zerstäuber und/oder das Heizelement können beispielsweise vor oder in der Gaszuleitung angeordnet sein, die das wasserstoffenthaltende Gas in den Reaktionsraum führt. Dies ermöglicht es auch molekularen Wasserstoff aus anderen bei Raumtemperatur nicht gasförmigen wasserstoffenthaltenden Stoffen zu gewinnen. Ferner kann dies ermöglichen die Kohlenstoffdioxidemission des Verkehrsbereichs wesentlich zu reduzieren. Hierfür kann die Plasmalysevorrichtung oder können mehreren Plasmalysevorrichtungen beispielsweise zwischen einem Tank eines Fahrzeugs, beispielsweise eines Schiffs, eines Flugzeugs, einer Lokomotive, eines Triebwagens, eines Lastkraftwagens, eines Personenkraftwagens oder dergleichen, und dessen Antrieb angeordnet sein, um fossilen Treibstoff, wie zum Beispiel Benzin, JP-8, Diesel oder Schweröl in molekularen Wasserstoff und elementaren Kohlenstoff umzuwandeln. Der molekulare Wasserstoff kann direkt als Treibstoff im Antrieb des Fahrzeugs für das Betreiben des Fahrzeugs verwendet werden. Alternativ, kann der molekulare Wasserstoff auch zusammen mit weiterem gasförmigen Beiprodukt als synthetischer Treibstoff, zum Beispiel synthetisches Gas bzw. Synthesegas oder auch Syngas, als Treibstoff im Antrieb verwendet werden. Hierfür kann beispielsweise mittels der Plasmalysevorrichtung synthetischer Treibstoff hergestellt werden, der als Treibstoff verwendet werden kann. Ferner kann der Wasserstoff auch verwendet werden, um eine Brennstoffzelle zu betreiben. Diese kann dann verwendet werden, um einen Elektromotor zu betreiben. Dies ermöglicht es die Anpassung der Fahrzeuge auf einen Wasserstoffbetrieb oder Betrieb mit synthetischem Gas zu reduzieren. Ferner kann dies ermöglichen die bisherige Infrastruktur für fossile Treibstoffe weiterzunutzen und dennoch die Kohlenstoffdioxidemission von Fahrzeugen wesentlich zu reduzieren. Der bei der Plasmalyse entstehende elementare Kohlenstoff kann im Fahrzeug gesammelt werden. Im Ergebnis, kann somit ein nahezu kohlenstoffdioxidfreier Verkehr mit fossilen Treibstoffen erreicht werden, wenn die fossilen Treibstoffe in der Plasmalysevorrichtung in molekularen Wasserstoff umgewandelt werden, der zum Betreiben der Fahrzeuge verwendet wird.

Nachfolgend werden vorteilhafte Ausführungsformen der erfindungsgemäßen Plasmalysevorrichtung beschrieben. Die zusätzlichen Merkmale der Ausführungsbeispiele können zur Bildung weiterer Ausführungsformen miteinander kombiniert werden, es sei denn, sie sind in der Beschreibung ausdrücklich als Alternativen zueinander beschrieben.

Die Plasmalysevorrichtung kann ein Gehäuse aufweisen. Das Gehäuse kann den Reaktionsraum, die Gaszuleitung, die Plasmaelektrode und die Gasableitung aufweisen. Der Reaktionsraum kann vom Gehäuse gebildet werden, so dass die Wand des Reaktionsraums eine Außenwand des Gehäuses ist. Alternativ, kann der Reaktionsraum auch innerhalb des Gehäuses angeordnet sein, so dass die Wand des Reaktionsraums und die Außenwand des Gehäuses nicht identisch sind.

Der Hochfrequenzgenerator kann Teil der Plasmalysevorrichtung sein oder als separates Gerät mit der Plasmalysevorrichtung verbunden werden. Der Hochfrequenzgenerator kann innerhalb oder außerhalb des Gehäuses angeordnet sein. Bevorzugt ist der Hochfrequenzgenerator außerhalb des Gehäuses angeordnet. In diesem Fall kann eine elektrische Kontaktierung von außen, d.h. außerhalb des Gehäuses erfolgen.

Der Hochfrequenzgenerator kann eine vorbestimmte Ausgangsimpedanz haben und mit der Plasmaelektrode über ein Anpassungsnetzwerk zur Impedanzanpassung einer Impedanz eines an der Plasmaelektrode durch die Koronaentladungen entstehenden Plasmas und der Ausgangsimpedanz des Hochfrequenzgenerators verbunden sein. Das Anpassungsnetzwerk kann Teil der Plasmalysevorrichtung sein oder Teil des separaten Geräts, das den Hochfrequenzgenerator enthält.

Vorteilhaft wird ein sogenanntes Anpassungsnetzwerk (auch Matching Network oder Matchbox) als Bindeglied zwischen Hochfrequenzgenerator und einem bei der Koronaentladung erzeugten Plasma eingesetzt, das die ohmschen und kapazitiven Anteile des Plasmas mit einer vom Hochfrequenzgenerator vorgegebenen Ausgangsimpedanz in Übereinstimmung bringt. Die Impedanz des Plasmas ist insbesondere abhängig von einem Abstand der Plasmaelektrode zur Koronaentladung, einer Zusammensetzung des wasserstoffenthaltenden Gases, einer Beschaffenheit des Reaktionsraums, sowie des den Reaktionsraum umschließenden Gehäuses, der Temperatur im Reaktionsraum, sowie der Atmosphäre im Reaktionsraum.

Der Hochfrequenzgenerator kann eine Messeinrichtung zum Messen einer Intensität und einer Leistung einer hin- und einer rücklaufenden Welle aufweisen. Die Messeinrichtung kann einen Richtkoppler und zwei Detektoren aufweisen.

Bevorzugt beträgt die Ausgangsimpedanz des Hochfrequenzgenerators 50 Ohm und/oder eine Ausgangsleistung des Hochfrequenzgenerators zwischen 30 W und 50 kW. Es hat sich gezeigt, dass insbesondere bei dieser Ausgangsimpedanz besonders zuverlässig ein Plasma bei gleichzeitig guter Wasserstoffausbeute ausgebildet wird.

Bevorzugt ist der Hochfrequenzgenerator dazu ausgebildet eine hochfrequente Wechselspannung mit einer Frequenz im Bereich von 1 MHz bis 40 MHz, insbesondere im Bereich von 10 MHz bis 20 MHz, zum Beispiel mit einer Frequenz von 13,56 MHz bereitzustellen. Vorteilhaft umfasst das Anpassungsnetzwerk mindestens einen motorgesteuerten Kondensator und mindestens eine variable Spule, beispielsweise zwei Spulen. Diese bilden zusammen einen elektrischen Schwingkreis, über den die Impedanzanpassung kontinuierlich auch auf schwankende Lasten durch das Plasma reagieren kann. Die Abstimmung der Kondensatoren und Spulen erfolgt in einer weiteren Ausführungsform automatisch über eine Reflexion- und Stehwellenregelkreismethode.

Der Hochfrequenzgenerator kann ausgebildet sein, die Wechselspannung in Form von Sinuswellen bereitzustellen. Dies kann es ermöglichen, eine höhere Energieeffizienz für das bei der Koronaentladung erzeugte Plasma zu erreichen. Alternativ oder zusätzlich kann der Hochfrequenzgenerator auch ausgebildet sein die Wechselspannung in einer komplexen Wellenform, einer rechteckigen Wellenform oder einer anderen Wellenform bereitzustellen.

Die Gaszuleitung kann derart angeordnet sein, dass das wasserstoffenthaltende Gas entlang einer Oberfläche der Plasmaelektrode in Richtung der Koronaentladung strömt. Die Gaszuleitung kann derart angeordnet sein, dass das wasserstoffenthaltende Gas entlang einer Innenoberfläche der Plasmaelektrode oder einer Außenoberfläche der Plasmaelektrode in Richtung der Koronaentladung strömt. Die Richtung der Koronaentladung entspricht der Strömungsrichtung des wasserstoffenthaltenden Gases von der Gaszuleitung in Richtung der Gasableitung. Die Gaszuleitung kann beispielsweise derart angeordnet sein, dass das wasserstoffenthaltenden Gas parallel zur Plasmaelektrode entlang deren Oberfläche in Richtung der Koronaentladung strömt. Dies kann es ermöglichen Verschmutzungen, die sich an der Oberfläche der Plasmaelektrode absetzen, zu entfernen. Zudem kann die Position und Form des Plasmas hierdurch beeinflusst werden. Beispielsweise kann das Plasma von der Gaszuleitung weg in Richtung der Gasableitung verschoben werden. Ferner kann dies eine gesicherte Plasmaentladung an einem Ende der Plasmaelektrode sicherstellen.

Die Plasmaelektrode kann massiv sein.

Die Plasmaelektrode kann ein flaches Ende zum Erzeugen der Koronaentladungen im Reaktionsraum aufweisen. Dies ermöglicht es das von der Plasmaelektrode erzeugte Plasmavolumen zu erhöhen. Die Plasmaelektrode kann auch eine gewölbte oder kegelförmige Elektrodenform zum Erzeugen der Koronaentladungen im Reaktionsraum haben.

Die Plasmaelektrode kann sich über den Reaktionsraum hinaus außerhalb des Gehäuses erstrecken. Dies kann ein Verbinden mit dem Hochfrequenzgenerator vereinfachen. Des Weiteren ermöglicht dies eine Position eines Endes der Plasmaelektrode im Reaktionsraum einzustellen, so dass auch die Position der Koronaentladung innerhalb des Reaktionsraums eingestellt werden kann.

Die Plasmaelektrode kann eine Öffnung aufweisen. Die Öffnung der Plasmaelektrode kann mit der Zuleitung verbunden sein. Die Plasmaelektrode kann derart angeordnet sein, dass das wasserstoffenthaltende Gas durch die Öffnung der Plasmaelektrode hindurch in den Reaktionsraum eingeführt wird. Dies ermöglicht einen direkten Kontakt der Plasmaelektrode mit dem Plasma der Koronaentladung. Dies kann den Energieverbrauch beim Spalten von wasserstoffenthaltenden Gasen verringern, da das Gas gezielt durch das nicht-thermische Plasma der Koronaentladung geführt werden kann. Zudem kann dies eine zusätzliche Pyrolyse ermöglichen. Die Plasmaelektrode kann auch mehrere Öffnungen aufweisen, die mit der Zuleitung verbunden sind. Dies ermöglicht es das wasserstoffenthaltende Gas über mehrere Öffnungen der Elektrode hindurch in den Reaktionsraum einzuführen. Die eine oder mehrere der Öffnungen können öffenbar und schließbar ausgebildet sein. Hierfür können beispielsweise Klappen in den Öffnungen oder ein Schiebeelement vorgesehen sein, das vor die jeweiligen zu schließenden Öffnungen geschoben werden kann. Dies kann eine verbesserte Steuerung der Koronaentladung ermöglichen. Alternativ oder zusätzlich kann die Koronaentladung auch zum Beispiel über die bereitgestellte Menge des wasserstoffenthaltenden Gases über die Gaszuleitung gesteuert werden.

Die Öffnung der Plasmaelektrode kann als Düse zum Einführen des wasserstoffenthaltenden Gases in den Reaktionsraum ausgebildet sein. Vorteilhaft bildet sich dadurch das nicht-thermische Plasma, das durch die Koronaentladung erzeugt wird, auf der Spitze der Plasmaelektrode bzw. der Düse aus. Das Einführen des wasserstoffenthaltenden Gases durch die Düse hindurch kann ein Kühlen der Plasmaelektrode, insbesondere deren Spitze, ermöglichen. Hierdurch kann eine Materialbelastung reduziert werden. Die Düse kann in direktem Kontakt mit dem Plasma der Koronaentladung stehen. Die Öffnung der Plasmaelektrode kann einen sich zwischen einer mit der Zuleitung verbundenen Plasmaelektrodenseite und einer mit der Reaktionsraum verbundenen Plasmaelektrodenseite veränderlichen Querschnitt haben. Insbesondere kann sich die Düse über einen Teilabschnitt verjüngen und/oder über einen Teilabschnitt erweitern. Die Düse kann beispielsweise eine Venturidüse oder eine Lavaldüse sein. Die Düsenform und der Durchmesser der Öffnung der Düse entscheiden über eine Dauer der Koronaentladung.

Die Plasmaelektrode kann beispielsweise Edelstahl, Messing, Kohlenstoff, und/oder Aluminium enthalten. Alternativ kann die Plasmaelektrode auch aus Edelstahl, Messing, Kohlenstoff, Aluminium oder einer Kombination von diesen bestehen. Insbesondere kann die Plasmaelektrode auch eine Graphitelektrode sein. Aluminium hat zum Beispiel eine gute Leitfähigkeit bei relativ geringen Kosten. Die Plasmaelektrode kann beispielsweise auch verschiedene Abschnitte, beispielsweise einen Abschnitt aus Edelstahl und einen Abschnitt aus Messing, Kohlenstoff, oder Aluminium aufweisen. Die Plasmaelektrode kann von einem temperaturbeständigen Material gebildet sein, dass zum Beispiel bis zu 800°C temperaturbeständig ist. Die Plasmaelektrode kann einen Katalysator aufweisen, zum Beispiel Eisen, Kobalt und/oder Nickel.

Zusätzlich oder alternativ kann die Plasmaelektrode eine Beschichtung, beispielsweise eine katalytische Beschichtung, wie zum Beispiel eine Nickelbeschichtung, eine Eisenbeschichtung, eine Kobaltbeschichtung oder eine Platinbeschichtung aufweisen. Die Beschichtung kann einen katalytischen Effekt ermöglichen. Die Beschichtung kann alternativ auch beispielsweise einen keramischer Werkstoff enthalten, wie zum Beispiel Aluminiumoxid, Nickeloxid, und/oder Titandioxid. Die Beschichtung kann beispielsweise eine Schichtdicke von 200 µm bis 1000 µm haben.

Die Plasmaelektrode kann beispielsweise einen Außendurchmesser zwischen 4 mm und 60 mm, zum Beispiel von 8 oder 16 mm haben. Die Öffnung der Plasmaelektrode kann einen Durchmesser zwischen 0,1 mm und 1 mm haben, zum Beispiel von 0,4 mm haben. Für den Fall, dass die Plasmaelektrode mehrere Öffnungen hat, können diese zum Beispiel zusammen einen Durchmesser zwischen 0,1 mm und 1 mm haben. Der Durchmesser der Öffnung der Plasmaelektrode kann entlang ihrer Längsachse zwischen dem mit der Gaszuleitung verbundenen Ende zum mit dem Reaktionsraum verbundenen Ende unterschiedlich sein. Die Plasmaelektrode kann beispielsweise eine Länge zwischen 50 mm und 300 mm, z.B. 150 mm haben.

Die Öffnung der Plasmaelektrode kann ein Gewinde aufweisen. Beispielsweise kann ein Aluminiumdrehteil in der Öffnung vorgesehen sein. In der Öffnung der Plasmaelektrode kann eine Düse angeordnet sein. Die Düse kann beispielsweise in die Öffnung eingeschraubt sein und eine verkleinerte Öffnung der Plasmaelektrode bilden. Hierfür kann die Düse beispielsweise ein Außengewinde aufweisen. Die Düse kann aus einem oder mehreren Materialien bestehen, beispielsweise Messing und Edelstahl. Die Düse kann eine FDM-Düse sein, wie sie beispielsweise für Schmelzschichtung (engl. fused deposition modeling) verwendet wird. Das Material oder die Materialien der Düse können temperaturbeständig sein, beispielsweise bis zu einer Temperatur von 800°C. Das Material der Düse kann einen Katalysator enthalten. Die Düse kann auch eine Beschichtung, beispielsweise eine katalytische Beschichtung aufweisen.

Die Plasmaelektrode kann elektrisch leitend über einen Rohrstopfen verbunden sein.

Die Plasmaelektrode kann ausgebildet sein, beispielsweise mit einer Leistung im Bereich zwischen 30 W und 50kW beaufschlagt zu werden.

Die Plasmalysevorrichtung kann ausgebildet sein, stoßförmige Gaspulse aus der Öffnung der Plasmaelektrode abzugeben, um sich im Reaktionsraum bildendes festes Beiprodukt aus dem Reaktionsraum zu entfernen. Dies kann ein Zusetzen der Plasmaelektrode, der Öffnung der Plasmaelektrode und/oder des Reaktionsraums mit sich in der Koronaentladung bildendem festen Beiprodukt verhindern. Die Gaspulse können mit dem wasserstoffenthaltenden Gas oder einem anderen Gas, beispielsweise einem Inertgas ausgeführt werden. Hierfür kann über die Gaszuleitung das wasserstoffenthaltende Gas oder das Inertgas zugeführt werden. Die Plasmalysevorrichtung kann derart ausgebildet sein, dass während der stoßförmigen Gaspulse keine Koronaentladung stattfindet. Hierfür kann beispielsweise, zusätzlich zum Gaspuls die Versorgung der Plasmaelektrode mit der hochfrequenten Spannung während des Abgeben eines stoßförmigen Gaspulses kurzzeitig unterbrochen werden, so dass keine Koronaentladung erzeugt wird. Alternativ, kann die Plasmalysevorrichtung derart ausgebildet sein, dass die Koronaentladung während der stoßförmigen Gaspulse aufrechterhalten wird. Dies ermöglicht ein kontinuierliches Spalten des wasserstoffenthaltenden Gases oder kontinuierliches Herstellen des molekularen Wasserstoffs.

Die Plasmalysevorrichtung kann einen Isolator aufweisen, der die Plasmaelektrode gegenüber einer Außenseite der Wand elektrisch isoliert. Der Isolator kann beispielsweise um die Plasmaelektrode herum an einem Übergang vom Reaktionsraum zu einer äußeren Umgebung des Reaktionsraums angeordnet sein. Der Isolator kann beispielsweise ein Keramikisolator sein. Der Isolator kann zum Beispiel von einer oder mehreren Keramiken, beispielsweise, von einer Hochtemperaturkeramik wie zum Beispiel einer technischen Keramik, gebildet sein. Die Hochtemperaturkeramik kann beispielsweise Aluminiumoxid (Al₂O₃) enthalten. Dies ermöglicht es die Plasmaelektrode von der Wand des Reaktionsraums elektrisch zu isolieren.

Bevorzugt kann die Plasmaelektrode in diesem Fall eine Graphitelektrode sein. Die Plasmaelektrode, in Form der Graphitelektrode, benötigt keine Kühlung. Während des Betriebs der Plasmalysevorrichtung kann die Graphitelektrode Kohlenstoffatome abgeben, beispielsweise, 1 bis 2 g an Kohlenstoff pro kWh. Die Graphitelektrode kann derart in der Plasmalysevorrichtung angeordnet sein, dass sie in den Reaktionsraum nachgeschoben werden kann, wenn sie einen Teil der Kohlenstoffatome abgegeben hat. Die Graphitelektrode kann beispielsweise kontinuierlich nachgeschoben werden oder diskontinuierlich, zum Beispiel, wenn eine bestimmte Menge an Kohlenstoffatomen abgegeben wurde. Ein kontinuierliches Nachschieben der Graphitelektrode kann einen kontinuierlichen Herstellungsprozess von molekularem Wasserstoff und dem wenigstens einen Beiprodukt ermöglichen. Alternativ oder zusätzlich kann die Wand des Reaktionsraums Graphit aufweisen oder von Graphit gebildet sein.

Der Reaktionsraum kann zwischen der Gaszuleitung und der Gasableitung eine Verjüngung aufweisen. Zusätzlich kann der Reaktionsraum zwischen der Gaszuleitung und der Gasableitung eine Erweiterung aufweisen. Dies ermöglicht eine Erhöhung der Strömungsgeschwindigkeit um festes Beiprodukt, beispielsweise in Form kleiner Partikel, aus dem Reaktionsraum über die Gasableitung abzuführen. Oder anders ausgedrückt, kann hierdurch eine Düsenströmung erzeugt werden. Ferner kann ein Eintrag von festem Beiprodukt in einen Raum, der sich in Strömungsrichtung des Gasstroms vor der Verjüngung befindet, weitgehend vermieden werden. Dies kann es ermöglichen den Reaktionsraum, insbesondere um die Plasmaelektrode, frei von festem Beiprodukt zu halten und so den Reinigungsaufwand zu reduzieren. Die Strömungsgeschwindigkeit kann im Reaktionsraum beispielsweise zwischen 5 und 20 m/s, bevorzugt zwischen 12 und 14 m/s betragen.

Eine Verjüngung entspricht einer Stelle des Reaktionsraums mit verringertem Querschnitt gegenüber einer in Strömungsrichtung des Gasstroms vorhergehenden axial benachbarten Stelle. In anderen Worten, bei einer Verjüngung ist ein Querschnitt des Reaktionsraums entlang der Längsachse an der Position der Verjüngung geringer als vor der Verjüngung. Eine Erweiterung entspricht einer Stelle des Reaktionsraums mit vergrößertem Querschnitt gegenüber einer in Strömungsrichtung des Gasstroms vorhergehenden axial benachbarten Stelle. In anderen Worten, bei einer Erweiterung ist ein Querschnitt des Reaktionsraums entlang der Längsachse an der Position der Erweiterung größer als vor der Erweiterung. Die Verjüngung und die Erweiterung können hintereinander angeordnet sein und die Form einer Lavaldüse haben.

Die Verjüngung und die Erweiterung können relativ zur Plasmaelektrode derart angeordnet sein, dass das von der Koronaentladung erzeugte Plasma an einer Stelle mit einem engsten Querschnitt des Reaktionsraums oder in dessen unmittelbarer Nähe endet. Dies kann ein Heraustragen von Beiprodukt, insbesondere von kleinen Partikeln, durch die Düsenströmung ermöglichen. Ferner kann somit eine heißeste Stelle des Plasmas an dieser Stelle angeordnet werden.

Die Plasmalysevorrichtung kann eine oder mehrere weitere Gaszuleitungen in den Reaktionsraum aufweisen. Über diese weiteren Gaszuleitungen kann beispielsweise ein weiteres wasserstoffenthaltendes Gas in den Reaktionsraum zugeführt werden. Es können auch mehrere verschiedene Gase, zum Beispiel Stickstoff oder Edelgase zugeführt werden. Die zugeführten Gase können zur Synthetisierung eines synthetischen Gases bzw. Syngases verwendet werden. Die zugeführten Gase können auch zusätzlich oder alternativ zur Reinigung des Reaktionsraums verwendet werden, beispielsweise, wenn sich festes Beiprodukt im Reaktionsraum, insbesondere an dessen Wand, abgesetzt hat.

Die weiteren Gaszuleitungen können im Reaktionsraum derart angeordnet sein, dass sie eine Verwirbelung des Gasstroms erzeugen, der dadurch aus der Gasableitung aus dem Reaktionsraum besser abgeführt werden kann. Eine oder mehrere der weiteren Gaszuleitungen können, zum Beispiel, an einer Stelle in oder in Strömungsrichtung des Gasstroms hinter der Erweiterung angeordnet sein. Dies ermöglicht es die Düsenströmung zu verwenden, um die weiteren Gase mit dem Gasstrom zu vermischen und aus dem Reaktionsraum abzuführen.

Die Plasmalysevorrichtung kann eine Steuereinheit aufweisen oder mit einer Steuereinheit verbunden sein. Die Steuereinheit kann ausgebildet sein das Abgeben der stoßförmigen Gaspulse zu steuern. Die Plasmalysevorrichtung kann beispielsweise ausgebildet sein zeitlich gesteuert, beispielsweise in regelmäßigen Zeitintervallen, stoßförmige Gaspulse aus der Öffnung der Plasmaelektrode abzugeben. Alternativ kann die Plasmalysevorrichtung ausgebildet sein in Abhängigkeit eines Ereignisses stoßförmige Gaspulse aus der Öffnung der Plasmaelektrode abzugeben. Das Ereignis kann beispielsweise von einem Leistungseintrag in die Plasmalysevorrichtung abhängen. Insbesondere kann das Ereignis sein, dass ein Schwellenwert des Leistungseintrags in die Plasmalysevorrichtung unterschritten wird. Die Steuereinheit kann in diesem Fall den Leistungseintrag erfassen und die Plasmalysevorrichtung so steuern, dass ein stoßförmiger Gaspuls aus der Öffnung der Plasmaelektrode abgegeben wird, sobald der Schwellenwert des Leistungseintrags unterschritten wird. Dies kann einen effizienteren Betrieb der Plasmalysevorrichtung ermöglichen. Ferner kann dies ein Zusetzen der Plasmaelektrode und/oder des Reaktionsraums mit festem Beiprodukt verhindern.

Alternativ oder zusätzlich können stoßförmige Gaspulse auch aus weiteren Öffnungen und/oder Düsen abgegeben werden, um festes Beiprodukt aus dem Reaktionsraum zu entfernen. Dies ermöglicht es festes Beiprodukt aus dem Reaktionsraum zu entfernen und so den Reaktionsraum zu reinigen.

Die nicht-geerdete, nicht-metallische Wand des gasdichten Reaktionsraums kann beispielsweise eine Keramik enthalten oder von einer Keramik gebildet sein. Als Keramik kann beispielsweise Macor verwendet werden, zum Beispiel mit einer chemischen Zusammensetzung von 46 % SiOz, 17 % MgO, 16 % Al₂O₃, 10 % K₂O, 7 % B₂O₃, 4 % F, bei der Glimmer in eine Borosilikatglas-Matrix eingebaut ist. Die Wand kann zum Beispiel auch aus Quarzglas sein oder Quarzglas enthalten.

Die Wand des Reaktionsraums kann auch eine metallische Außenseite und eine nicht-metallische, elektrisch-isolierende Innenseite aufweisen, Die nicht-metallische, elektrisch-isolierende Innenseite kann zum Beispiel von Teflon gebildet sein.

Die Wand kann beispielsweise eine Wanddicke von mindestens 4 mm haben.

Ein Querschnitt des Reaktionsraums kann sich in Richtung von der Gaszuleitung zur Gasableitung vergrößern. Dies kann ein Anhaften von festem Beiprodukt an der Innenseite der Wand reduzieren. Ferner kann dies Verwirbelungen im Reaktionsraum reduzieren und ein besseres Abführen von molekularem Wasserstoff und Beiprodukt ermöglichen. Der Reaktionsraum kann beispielsweise trichterförmig sein. Die Öffnung der Plasmaelektrode kann beispielsweise auf einer mittleren Höhe des Reaktionsraums angeordnet sein.

Die Plasmalysevorrichtung kann eine Ableitung für wenigstens ein festes Beiprodukt aus dem Reaktionsraum aufweisen. Feste Beiprodukte können beispielsweise in Pulverform vorliegen. Das Abführen der festen Beiprodukte aus dem Reaktionsraum kann die Prozesseffizienz verbessern, da diese den Spaltungsprozess nicht mehr stören können. Feste Beiprodukte können beispielsweise für den Fall, dass das wasserstoffenthaltende Gas Methan ist, pulverförmiger Kohlenstoff und für den Fall, dass das wasserstoffenthaltende Gas Schwefelwasserstoff ist, pulverförmiger Schwefel sein.

Die Gasableitung für den molekularen Wasserstoff kann beispielsweise in Strömungsrichtung des wasserstoffenthaltenden Gases oder quer dazu angeordnet sein. Die Gasableitung für den molekularen Wasserstoff kann auch ausgebildet sein gasförmige Beiprodukte aus dem Reaktionsraum abzuführen. Die Gasableitung kann ferner dazu ausgebildet sein festes Beiprodukt, beispielsweise in Form von Partikeln, das mit dem Gasstrom mitgeführt wird aus dem Reaktionsraum abzuführen.

Der Reaktionsraum kann eine Hauptkammer und eine Nebenkammer aufweisen. Die Plasmaelektrode kann relativ zur Hauptkammer derart angeordnet sein, dass die Koronaentladung in der Hauptkammer zündet. Die Nebenkammer kann oberhalb der Hauptkammer angeordnet sein, so dass festes Beiprodukt in die Nebenkammer strömen kann. Hierbei kann das feste Beiprodukt beispielsweise in Form von Partikeln von dem molekularen Wasserstoff und gasförmigen Beiprodukt gebildeten Gasstrom aus dem Reaktionsraum abgeführt werden. Alternativ kann die Nebenkammer auch unterhalb der Hauptkammer angeordnet sein, so dass festes Beiprodukt in die Nebenkammer herabfallen kann.

Die Nebenkammer kann also im Betrieb der Plasmalysevorrichtung weiter entfernt oder dichter am Massenschwerpunkt der Erde als die Plasmaelektrode sein. Somit kann die Nebenkammer weiter entfernt oder dichter am Massenschwerpunkt der Erde als der Ort der Koronaentladung angeordnet sein. Festes Beiprodukt, das bei der Koronaentladung entsteht, kann durch die Erdanziehung unterstützt nach unten in die Nebenkammer fallen, wenn die Nebenkammer im Betrieb der Plasmalysevorrichtung dichter am Massenschwerpunkt der Erde als die Plasmaelektrode ist. Wenn die Nebenkammer im Betrieb der Plasmalysevorrichtung weiter entfernt vom Massenschwerpunkt der Erde als die Plasmaelektrode ist, ist bevorzugt die Gasableitung der Öffnung der Plasmaelektrode gegenüberliegend angeordnet, so dass festes Beiprodukt, das in der Koronaentladung entsteht mit dem Gasstrom in die Gasableitung aus dem Reaktionsraum abgeführt wird. Dies ermöglicht es festes Beiprodukt einfach aus der Hauptkammer zu entfernen, so dass dieses die Koronaentladung nicht stören kann.

Die Nebenkammer kann mit der Ableitung für das wenigstens eine feste Beiprodukt verbunden sein, um das feste Beiprodukt aus dem Reaktionsraum abzuführen. Dies ermöglicht es das feste Beiprodukt von der Nebenkammer aufzunehmen und aus dieser mittels der Ableitung abzuführen. Falls das feste Beiprodukt zum Beispiel Kohlenstoff ist, kann die Nebenkammer als Kohlenstoffbunker dienen.

Die Nebenkammer, die Gasableitung, und/oder die Ableitung können eine Abführeinrichtung zum Abführen von Beiprodukt aufweisen. Die Abführeinrichtung kann ausgebildet sein, festes Beiprodukt aus dem Reaktionsraum derart abzuführen, dass kein Gas über diese in den Reaktionsraum eindringen kann. Die Abführeinrichtung kann beispielsweise eine Klappe, einen Exzenter, eine Schnecke, eine Zellradschleuse oder eine andere Abführeinrichtung aufweisen. In der Abführeinrichtung kann ein Überdruck erzeugt werden, der ein Eindringen von Gas in die Abführeinrichtung verhindert. Hierfür kann eine Pumpe vorgesehen sein. Dies kann es ermöglichen das feste Beiprodukt aus der Plasmalysevorrichtung Abzuführen ohne Gas von außen in den Reaktionsraum eindringen zu lassen.

In einer Ausführungsform, in dem die Abführeinrichtung eine Klappe ist, ist diese bevorzugt an einer Gabelung der Gasableitung angeordnet und ausgebildet den Gasstrom aus dem Reaktionsraum entweder in die eine der sich an die Gabelung anschließenden Leitungen oder in die andere abzuführen. Hierfür verschließt die Klappe eine der Leitungen. Die Klappe kann beispielsweise an einem steuerbaren Gelenk angeordnet sein. so dass die Klappe abhängig davon, ob ein stoßförmiger Gaspuls aus der Öffnung der Plasmaelektrode abgegeben wird, die eine oder die andere Leitung verschließt. Dies kann es ermöglichen festes Beiprodukt, dass aus dem Reaktionsraum durch einen stoßförmigen Gaspuls abgeführt wird von dem in der Koronaentladung entstehenden molekularen Wasserstoff zu trennen.

Zusätzlich oder alternativ kann die Abführeinrichtung auch einen oder mehrere druckgesteuerte Partikelfilter aufweisen, die ausgebildet sind festes Beiprodukt aufzunehmen und bei einer abrupten Druckänderung abzugeben. Die abrupte Druckänderung kann beispielsweise durch einen stoßförmigen Gaspuls erzeugt werden. Dies kann es ermöglichen festes Beiprodukt besser vom molekularen Wasserstoff zu trennen.

Die Hauptkammer und die Nebenkammer können von unterschiedlichen Reaktionsraumteilen umschlossen sein. Der die Hauptkammer umschließende Reaktionsraumteil kann beispielsweise von Quarzglas gebildet sein. Der Reaktionsraumteil kann ein Gehäuseteil sein. Dies kann ein Beobachten der in dem Reaktionsraum stattfindenden Reaktion ermöglichen. Der die Hauptkammer umschließende Reaktionsraumteil kann beispielsweise eine Wanddicke von mindestens 4 mm haben.

Die Innenseite der Wand der Nebenkammer kann ein höheres elektrostatisches Potential als die Innenseite der Wand der Hauptkammer aufweisen. Dies kann es ermöglichen feste Beiprodukte aus der Hauptkammer in eine Richtung der Nebenkammer anzuziehen.

Die Gasableitung für den molekularen Wasserstoff kann oberhalb der Plasmaelektrode angeordnet sein. Bevorzugt ist die Gasableitung für den molekularen Wasserstoff oberhalb der Plasmaelektrode angeordnet, wenn das wasserstoffenthaltende Gas durch die Öffnung der Plasmaelektrode hindurch in den Reaktionsraum eingeführt wird. Die Gasableitung für den molekularen Wasserstoff kann also weiter vom Massenschwerpunkt der Erde entfernt angeordnet sein, als die Plasmaelektrode und somit auch weiter vom Massenschwerpunkt der Erde entfernt sein als der Ort der Koronaentladung. Dies ermöglicht eine einfachere Trennung von gasförmigen und festen Bestandteilen, die bei der Koronaentladung erzeugt werden. Bevorzugt ist die Gasableitung für den molekularen Wasserstoff in einer Strömungsrichtung des wasserstoffenthaltenden Gases angeordnet. Dies kann das Ableiten des entstehenden molekularen Wasserstoffs verbessern. Dies ist beispielsweise der Fall, wenn das wasserstoffenthaltende Gas durch die Öffnung der Plasmaelektrode hindurch in den Reaktionsraum eingeführt wird und die Gasableitung für den molekularen Wasserstoff der Plasmaelektrode gegenüberliegend angeordnet ist.

Ein Abstand der Wand des Reaktionsraums zur Plasmaelektrode kann beispielsweise mindestens 40 mm, bevorzugt mehr als 80 mm betragen. Der Abstand der Wand des Reaktionsraums zur Plasmaelektrode ist hier die geringste Entfernung zwischen einer Innenseite der Wand des Reaktionsraums zu einem Außendurchmesser der Plasmaelektrode. Alternativ oder zusätzlich, kann der Abstand der Wand des Reaktionsraums zur Spitze der Plasmaelektrode mindestens 40 mm betragen. Alternativ oder zusätzlich, kann ein Abstand der Gasableitung zur Plasmaelektrode mindestens 60 mm betragen. Dies ermöglicht es eine elektrische Isolierung bereitzustellen, so dass Überschläge zwischen der Plasmaelektrode und anderen Potentialen, wie zum Beispiel der Wand des Reaktionsraums oder dem Gehäuse verhindert werden können. Ferner kann dies ermöglichen eine Ansammlung von festem Beiprodukt im Reaktionsraum zu verringern, da ausreichend Platz vorhanden ist, um festes Beiprodukt zu sammeln und abzuführen.

Die Plasmalysevorrichtung kann ausgebildet sein, wasserstoffenthaltendes Gas mit einer Durchflussrate zwischen 1 l/min und 100 l/min, beispielsweise mit eine Durchflussrate von 2 l/min, in den Reaktionsraum einzuführen. Um so größer die Durchflussrate, desto besser ist die Plasmalysevorrichtung geeignet feste sich agglomerierende Strukturen des Beiprodukts aus dem Reaktionsraum zu entfernen. Insbesondere, wenn das wasserstoffenthaltende Gas Methan enthält, können durch eine Erhöhung der Durchflussrate mehr feste Kohlenstoffstrukturen aus dem Reaktionsraum geführt werden. Eine höhere Durchflussrate verringert jedoch ab einer gewissen Durchflussrate die Prozesseffizienz bzw. die Ausbeute an molekularem Wasserstoff. Die Plasmalysevorrichtung kann ausgebildet sein, eine Durchflussrate derart einzustellen, dass die Wasserstoffausbeute optimiert ist.

Der Reaktionsraum kann ein Reinigungselement zum Entfernen von festem Beiprodukt aufweisen. Das Reinigungselement ermöglicht es, festes Beiprodukt, das sich während eines Betriebs der Plasmalysevorrichtung im Reaktionsraum anlagern kann, zu entfernen. Dies ermöglicht es, einen störenden Einfluss des festen Beiprodukts auf die Koronaentladung zu verhindern oder zumindest zu verringern. Im Betrieb der Plasmalysevorrichtung können beispielsweise aus dem festen Beiprodukt baumartige Strukturen oder lange Stifte, beispielsweise Graphitstifte, wachsen und sich festes Beiprodukt an der Innenseite der Wand des Reaktionsraums anlagern. Die baumartigen Strukturen oder langen Stifte können beispielsweise an einer Spitze der Plasmaelektrode wachsen und temporär einen Teil der Plasmaelektrode bilden. Durch das Reinigungselement können auch solche störenden festen Beiprodukte mechanisch entfernt werden, die durch eine höhere Durchflussrate durch die Gaszuleitung nicht entfernt werden können.

Der Reaktionsraum kann auch mehrere Reinigungselemente aufweisen. Beispielsweise ein Reinigungselement zum Entfernen von festem Beiprodukt von der Innenseite der Wand des Reaktionsraums und ein Reinigungselement zum Entfernen von festem Beiprodukt von der Plasmaelektrode. Dies kann ein verbessertes Entfernen von festem Beiprodukt aus dem Reaktionsraum ermöglichen. Zudem kann ein Reinigungselement zum Entfernen von festem Beiprodukt von der Plasmaelektrode einen kontinuierlichen Herstellungsprozess von molekularem Wasserstoff ermöglichen, da zum Entfernen des Beiprodukts keine stoßförmigen Gaspulse erforderlich sind, die den Herstellungsprozess temporär unterbrechen könnten. Das Reinigungselement kann zum Beispiel durch die Koronaentladung bzw. das Plasma bewegt werden.

Das Reinigungselement kann an einer Innenseite derWand des Reaktionsraums angeordnet sein, um das wenigstens eine feste Beiprodukt aus dem Reaktionsraum zu Entfernen. Beispielsweise kann das Reinigungselement entlang der Innenseite der Wand des Reaktionsraums bewegbar, zum Beispiel verfahrbar, sein. Dies kann es ermöglichen, feste Beiprodukte, die sich im Reaktionsraum durch die Koronaentladung bilden und an der Innenseite der Wand des Reaktionsraums anlagern, mechanisch zu entfernen. Das Reinigungselement kann eine Aussparung oder eine Öffnung in seiner Mitte aufweisen, die einen größeren Durchmesser hat als der Außendurchmesser der Plasmaelektrode. Dies kann es ermöglichen, dass das Reinigungselement über die gesamte Länge bzw. Höhe des Reaktionsraums verfahrbar ist.

Alternativ oder zusätzlich kann das Reinigungselement auch ein Rotationselement aufweisen, um die Plasmaelektrode relativ zur Wand des Reaktionsraums um eine gemeinsame Längsachse zu drehen. Hierfür können Gleitdichtungsringe zwischen den Wänden des Reaktionsraums und der Plasmaelektrode vorgesehen sein. Durch das Reinigungselement können die Strukturen aus festem Beiprodukt, die sich von der Plasmaelektrode bis zur Innenseite der Wand des Reaktionsraums erstrecken können, durch Drehen aufgebrochen werden. Durch relatives Drehen der Plasmaelektrode zur Wand des Reaktionsraums während der Koronaentladung kann auch verhindert werden, das solche Strukturen überhaupt erst entstehen.

Alternativ oder zusätzlich kann das Reinigungselement auch an der Plasmaelektrode angeordnet sein und relativ zur Plasmaelektrode um deren Längsachse herum verfahrbar sein. Dies kann ein Entfernen von festem Beiprodukt von der Plasmaelektrode ermöglichen. Das Reinigungselement kann selber verfahrbar sein und/oder die Plasmaelektrode kann um ihre Längsachse herum drehbar sein, so dass das Reinigungselement relativ zur Plasmaelektrode verfahrbar ist. Das Reinigungselement kann auch an seiner Position fixiert sein, wenn die Plasmaelektrode um ihre Längsachse herum drehbar ist. Das Reinigungselement kann einen Schaber oder eine Kante zum mechanischen Entfernen von festem Beiprodukt aufweisen. Dies kann ein einfacheres mechanisches Entfernen von festem Beiprodukt ermöglichen.

Das Reinigungselement kann auch eine oder mehrere Düsen zum Ausblasen des Reaktionsraums aufweisen. Der Reaktionsraum kann beispielsweise mit einem stoßförmigen Gaspuls ausgeblasen werden. Hierfür kann die Düse oder können die Düsen mit wasserstoffenthaltendem Gas oder einem anderen Gas, beispielsweise Inertgas versorgt werden. Die Düsen können beispielsweise in der Wand des Reaktionsraums, insbesondere an dessen Innenseite angeordnet sein. Dies kann ein Entfernen von Beiprodukt, insbesondere von festem Beiprodukt, aus dem Reaktionsraum verbessern. Das Reinigungselement kann auch eine Ultraschallreinigungsvorrichtung enthalten, die ausgebildet ist das Gas in der Nähe von im Reaktionsraum angelagerten festem Beiprodukt in Schwingung zu versetzen, um dieses aus dem Reaktionsraum zu entfernen.

Die Steuereinheit der Plasmalysevorrichtung oder die mit der Plasmalysevorrichtung verbundene Steuereinheit kann ausgebildet sein, Parameter der Plasmalysevorrichtung, wie zum Beispiel eine Durchflussrate des wasserstoffenthaltenden Gases, eine Temperatur des wasserstoffenthaltenden Gases, eine Temperatur im Reaktionsraum, eine Temperatur der Plasmaelektrode, einen Druck im Reaktionsraum, eine Spannungshöhe der Wechselspannung, eine Frequenz der Wechselspannung, eine Stromstärke, eine Gasabkühlungsgeschwindigkeit des wasserstoffenthaltenden Gases, eine Gasabkühlungsgeschwindigkeit des durch die Koronaentladung erzeugten Gasgemischs, eine Frequenz der Koronaentladungen oder andere Parameter der Plasmalysevorrichtung, zu steuern. Insbesondere kann die Steuereinheit ausgebildet sein die Parameter der Plasmalysevorrichtung in Abhängigkeit einer Zusammensetzung des wasserstoffenthaltenden Gases zu steuern.

Die Plasmalysevorrichtung kann eine oder mehrere Analysevorrichtungen zur Analyse des wasserstoffenthaltenden Gases, des molekularen Wasserstoffs und des wenigstens einen Beiprodukts enthalten. Die Analysevorrichtungen können vor, in oder hinter der Gaszuleitung und/oder der Gasableitung angeordnet sein. Dies ermöglicht es die Gasströme die der Plasmalysevorrichtung zugeführt werden und die aus dem Reaktionsraum abgeführt werden zu analysieren. Die Steuereinheit kann ausgebildet sein entsprechend der Zusammensetzung der Gasströme die Parameter der Plasmalysevorrichtung zu steuern. Beispielsweise können vor und hinter der Plasmalysevorrichtung Volumenmessgeräte, Methansensoren, Wasserstoffsensoren, Ramanspektrometer und/oder Massenspektrometer angeordnet sein.

Die Plasmalysevorrichtung kann ein Temperaturregulierungselement, beispielsweise ein Heizelement und/oder ein Kühlelement, für den Reaktionsraum aufweisen, um eine Temperatur im Reaktionsraum einzustellen. Die Änderung der Temperatur innerhalb des Reaktionsraums kann es ermöglichen, die Wasserstoffausbeute zu erhöhen. Der Reaktionsraum wird bevorzugt weder gekühlt noch erhitzt, so dass dieser grundsätzlich auf Umgebungstemperatur ist, bevor eine Koronaentladung stattfindet.

Die Plasmalysevorrichtung kann ausgebildet sein im Reaktionsraum durch Erwärmung erzeugte Wärme für eine Pyrolyse zu verwenden. Dies ermöglicht ein zusätzliches Spalten des wasserstoffenthaltenden Gases mittels einer Pyrolysereaktion. Alternativ oder zusätzlich, kann die Wärme auch abgeführt werden. Die Wärme kann beispielsweise über die Gasableitung mit dem molekularen Wasserstoff und/oder gasförmigen Beiprodukt aus dem Reaktionsraum abgeführt werden. Über Wärmetauscher kann die Wärme dann für einen weiteren Verwendungszweck, zum Beispiel zum Erwärmen von Gebäuden verwendet werden. Die Wärme kann beispielsweise in einer Heizung verwendet werden. Die Wärme kann auch in einem Ofen, zum Beispiel einem Wärmeofen verwendet werden. Der Wärmeofen kann zum Beispiel für das Herstellen von Baustoffen, beispielsweise Ziegeln, insbesondere Dachziegeln, vorgesehen sein. Dies kann die Kohlenstoffdioxidbilanz von Baustoffen verbessern, da die Wärme Kohlenstoffdioxidfrei produziert wird.

Die Plasmalysevorrichtung kann zusätzlich oder alternativ ein Elektrodentemperaturregulierungselement, beispielsweise ein Elektrodenkühlelement, für die Plasmaelektrode aufweisen, um eine Temperatur der Plasmaelektrode einzustellen. Die Plasmaelektrode kann beispielsweise auf eine Temperatur im Bereich zwischen 60°C und 400°C, beispielsweise zwischen 60°C und 70°C oder zwischen 350°C und 400°C, eingestellt werden.

Die Plasmalysevorrichtung kann eine Pumpe aufweisen, um den Druck innerhalb des Reaktionsraums anzupassen. Die Änderung des Drucks innerhalb des Reaktionsraums kann es ermöglichen, die Wasserstoffausbeute zu erhöhen. Bevorzugt herrscht im Reaktionsraum Umgebungsdruck bevor das wasserstoffenthaltende Gas eingeführt wird.

Die Plasmalysevorrichtung kann eine Zuleitung für ein Inertgas aufweisen. Alternativ kann das Inertgas auch mit dem wasserstoffenthaltenden Gas über die Gaszuleitung für das wasserstoffenthaltende Gas in den Reaktionsraum eingeführt werden. Das Inertgas kann beispielsweise Stickstoff und/oder ein oder mehrere Edelgase, wie Helium oder Argon enthalten. Das Inertgas kann die Reaktionsrate erhöhen, da mehr Elektronen und Photonen für die Koronaentladung zur Verfügung stehen. Das Inertgas kann auch ein Reinigen des Reaktionsraums unterstützen.

Die Wand des Reaktionsraums kann von einem temperaturbeständigen Material für Temperaturen von beispielsweise mindestens 800°C gebildet sein, bevorzugt werden Wände aufweisend Graphit verwendet, bis 2500°C temperaturbeständig sind. Die Wand kann auch mehrere Materialien enthalten, die bevorzugt alle mindestens bis zu 800°C temperaturbeständig sind. Das Material kann oder die Materialien können zusätzlich formstabil sein. Die Wand des Reaktionsraums kann eine thermische Isolierung aufweisen. Dies kann es ermöglichen, eine temperaturbeständige und formstabile Wand für den Reaktionsraum bereitzustellen. Darüber hinaus kann eine solche Wand zu einer verbesserten Konversion von wasserstoffenthaltendem Gas beitragen.

Die Wand des Reaktionsraums kann druckfest sein, beispielsweise bis zu 10 bar Überdruck. Bevorzugt ist die Wand des Reaktionsraums so ausgebildet, dass sie einem dauerhaften Überdruck von bis zu 10 bar standhält. Besonders bevorzugt ist die Wand des Reaktionsraums derart ausgebildet, dass sie auch stoßförmigen Gaspulsen mit höheren Drücken als 10 bar standhält.

Die Plasmalysevorrichtung kann eine elektrische Isolierung zum Schutz vor elektrischen Überschlägen zwischen der Plasmaelektrode und einem anderen Potential, wie beispielsweise der Wand des Reaktionsraums oder dem Gehäuse, aufweisen. Die elektrische Isolierung kann beispielsweise durch den Abstand der Plasmaelektrode zur Innenseite der Wand des Reaktionsraums sichergestellt werden.

Der Reaktionsraum kann einen Katalysator, zum Beispiel Nickel, Eisen, Ruthenium, Cobalt oder Platin enthalten.

Die Plasmalysevorrichtung kann einen Partikelfilter aufweisen, um Partikel zu filtern. Bevorzugt ist der Partikelfilter in der Gaszuleitung für das wasserstoffenthaltende Gas angeordnet, um Partikel vor dem Reaktionsraum aus dem wasserstoffenthaltenden Gas zu filtern. Dies kann es ermöglichen, Verunreinigungen durch Partikel im Gasstrom zu verringern, die zu ungewollten Beiprodukten führen können. Die Plasmalysevorrichtung kann auch mehrere Partikelfilter aufweisen. Bevorzugt ist einer der Partikelfilter in der Gasableitung angeordnet, um Partikel aus dem Gasstrom zu filtern, der aus dem Reaktionsraum in die Gasableitung geführt ist.

Die Plasmalysevorrichtung kann eine oder mehrere Membranen und/oder einen oder mehrere Adsorber aufweisen, um gasförmiges Beiprodukt aus einem Gasstrom der Gasableitung für den molekularen Wasserstoff herauszufiltern. Diese können beispielsweise innerhalb der Gasableitung für den molekularen Wasserstoff oder an einem Ende der Gasableitung für den molekularen Wasserstoff angeordnet sein. Es können zum Beispiel Polymermembranen zur Trennung von molekularem Wasserstoff und gasförmigen Beiprodukt, eingesetzt werden. Als Adsorber können beispielsweise keramische Werkstoffe mit großer Oberfläche und hoher Adsorptionskapazität für ein entsprechendes gasförmiges Beiprodukt verwendet werden, insbesondere sogenannte Molekularsiebe. Neben Zeolithen, also kristallinen Alumosilikaten können dies auch Kohlenstoffmolekularsiebe sein. Es können zum Beispiel Kieselgel (Silica-Gel) oder aktiviertes Aluminiumoxid als Adsorber eingesetzt werden. Als Adsorber kann auch beispielsweise Zeolite Socony Mobil-5 (ZSM-5), ein synthetischer high-silica Alumosilicat-Zeolith eingesetzt werden. Dies ermöglicht es gasförmiges Beiprodukt vom molekularen Wasserstoff abzutrennen. Des Weiteren kann das gasförmige Beiprodukt wieder über die Zuleitung in den Reaktionsraum zugeführt werden. Dies kann die Ausbeute an molekularen Wasserstoff erhöhen.

Ferner kann die Membran oder der selektive Adsorber auch selektiv in die Gasableitung für den molekularen Wasserstoff eingeführt werden, um eine Zusammensetzung des die Gasableitung für den molekularen Wasserstoff durchströmenden Gasstroms einzustellen. Beispielsweise kann entsprechend den Anforderungen an einen Methan-Wasserstoff-Treibstoff gezielt im Gasstrom verbleibendes Methan in einem vorbestimmten Verhältnis mit dem molekularen Wasserstoff gemischt werden. Dies kann es ermöglichen einen synthetischen Treibstoff, insbesondere ein synthetisches Gas bereitzustellen.

Die Plasmalysevorrichtung kann ein Reservoir aufweisen. Das Reservoir kann mit der Gasableitung für den molekularen Wasserstoff verbunden sein. Die eine oder mehreren Membranen können in dem Reservoir angeordnet sein. Auch der Adsorber kann im Reservoir angeordnet sein. Der Adsorber kann beispielsweise in Form einer Schüttung oder eines offenporigen Schaumes in dem Reservoir angeordnet sein. Der Adsorber zur Trennung von molekularem Wasserstoff und gasförmigen Beiprodukt ist vorteilhaft derart ausgebildet, dass gasförmiges Beiprodukt an ihm bevorzugt über Adsorption gebunden wird. Es können aber auch Kombinationen von Membranen und Adsorber für unterschiedliche entstehende gasförmige Beiprodukte eingesetzt werden. Zum Beispiel trennen Polymermembranen gut CO₂ und CH₄ und N₂, aber auch beispielsweise Zeolithe wie ZSM-5, können eingesetzt werden.

Das Reservoir kann eine Lösevorrichtung zum Lösen des adsorbierten gasförmigen Beiprodukts aufweisen. Diese kann beispielsweise in Form einer Heizung zum thermischen Lösen des gasförmigen Beiprodukts oder in Form einer Vakuumpumpe zur Beaufschlagung mit Unterdruck ausgebildet sein. Das Reservoir kann aber auch eine verschließbare Öffnung aufweisen, über die der beladene Absorber nach der Adsorption gegen einen unbeladenen ausgetauscht werden kann.

Die Plasmalysevorrichtung kann in ortsfesten Strukturen oder mobilen Strukturen verwendet werden. Ortsfeste Strukturen umfassen beispielsweise ortsfeste Gebäude oder Anlagen, wie ortsfeste Biogasreaktoren oder ortsfeste Kläranlagen. Mobile Strukturen umfassen beispielsweise mobile Gebäude, Bohrplattformen und Fahrzeuge, wie Flugzeuge, Lkws, Pkws, Eisenbahnen oder Schiffe, insbesondere Kreuzfahrtschiffe.

Gemäß einem weiteren Aspekt betrifft die Erfindung ein Plasmalysesystem zum koronaentladungsinduzierten Spalten von wasserstoffenthaltenden Gasen in molekularen Wasserstoff und wenigstens ein Beiprodukt. Das Plasmalysesystem enthält wenigstens zwei Plasmalysevorrichtungen gemäß einem der Ansprüche 1 bis 6 oder einer Ausführungsform der Plasmalysevorrichtung. Die Plasmalysevorrichtungen sind parallel oder in Reihe zueinander angeordnet. Die Plasmalysevorrichtungen können beispielsweise in Reihe zueinander angeordnet sein, indem wenigstens eine Gasableitung einer vorherigen Plasmalysevorrichtung mit einer Gaszuleitung einer nachfolgenden Plasmalysevorrichtung verbunden ist. Dies kann es ermöglichen, mehrere Plasmalysevorrichtungen hintereinander anzuordnen, um eine vollständige Spaltung des wasserstoffenthaltenden Gases zu ermöglichen. Insbesondere können so die Reaktionsräume der Plasmalysevorrichtungen miteinander verbunden werden. Die Plasmalysevorrichtungen können beispielsweise auch ringförmig angeordnet sein, d.h., derart das die Plasmalysevorrichtungen einen Ring bilden, so dass jeweils eine Gasableitung einer vorhergehenden Plasmalysevorrichtung mit der Gaszuleitung einer nachfolgenden Plasmalysevorrichtung verbunden ist. Das Plasmalysesystem kann eine Gasableitung aus dem Plasmalysesystem vorsehen, um den molekularen Wasserstoff aus dem Plasmalysesystem abzuführen. Im Fall eines ringförmigen Plasmalysesystems ist die Gasableitung aus dem Plasmalysesystem eine zusätzliche Gasableitung neben der jeweiligen Gasableitung, die jeweils mit der Gaszuleitung der nachfolgenden Plasmalysevorrichtung verbunden ist.

Das Plasmalysesystem ermöglicht ein Skalieren des koronaentladungsinduzierten Spaltens von wasserstoffenthaltenden Gasen in molekularen Wasserstoff und wenigstens ein Beiprodukt. Eine beliebige Anzahl an Plasmalysevorrichtungen kann parallel zueinander betrieben werden, um so große Mengen an Wasserstoff aus wasserstoffenthaltenden Gasen zu gewinnen.

Die Plasmalysevorrichtungen des Plasmalysesystems können über eine gemeinsame Steuereinheit gesteuert werden.

Die gemeinsame Steuereinheit kann ausgebildet sein, die Parameter der Plasmalysevorrichtung zu steuern, insbesondere in Abhängigkeit einer Zusammensetzung des wasserstoffenthaltenden Gases zu steuern. Das Plasmalysesystem kann eine oder mehrere Analysevorrichtung enthalten. Die Analysevorrichtungen können angeordnet und ausgebildet sein die Zusammensetzungen der Gasströme, die dem Plasmalysesystem zugeführt werden oder aus diesem abgeführt werden, zu analysieren. Die Analysevorrichtungen können zusätzlich oder alternativ dazu angeordnet und ausgebildet sein die Zusammensetzungen der Gasströme, die einzelnen Plasmalysevorrichtungen des Plasmalysesystems zugeführt werden oder aus diesen abgeführt werden, zu analysieren.

Das Plasmalysesystem kann eine Temperaturregulierungseinheit aufweisen, um eine Temperatur des wasserstoffenthaltenden Gases einzustellen. Die Temperaturregulierungseinheit kann beispielsweise einen Wärmetauscher und/oder ein Kühlaggregat aufweisen. Dies ermöglicht es vortemperiertes wasserstoffenthaltendes Gas in den Reaktionsraum oder die Gaszuleitung zu führen. Ferner können wasserstoffenthaltende Flüssigkeiten in den gasförmigen Aggregatzustand überführt werden. Die Temperaturregulierungseinheit kann außerhalb der Plasmalysevorrichtungen angeordnet sein oder Teil einer oder mehrerer der Plasmalysevorrichtungen sein. Die Temperaturregulierungseinheit kann beispielsweise in einer der Gaszuleitungen für das wasserstoffenthaltende Gas angeordnet sein.

Das Plasmalysesystem kann einen oder mehrere Ventilatoren zum Einstellen einer Durchflussrate durch die Plasmalysevorrichtungen aufweisen.

Das Plasmalysesystem kann eine oder mehrere Strahlungsquellen, beispielsweise ultraviolette (UV) Strahlungsquellen aufweisen. Diese können ein verbessertes Steuern der Zündung der Koronaentladung ermöglichen. Hierfür kann die Strahlungsquelle so angeordnet sein, dass die Strahlungsquelle ihre Strahlung an den Ort der Koronaentladung einbringen kann. Auch ohne Strahlungsquelle kann hochenergetische UV Strahlung bei der Koronaentladung erzeugt werden, die beim Spalten weiterer Molekülbindungen beitragen kann.

Das Plasmalysesystem kann einen oder mehrere Hochfrequenzgeneratoren aufweisen. Diese können ausgebildet sein eine hochfrequente Wechselspannung für eine Plasmaelektrode der jeweiligen Plasmalysevorrichtung bereitzustellen.

Das Plasmalysesystem kann einen Speicher mit einem Stoff, aus dem wasserstoffenthaltendes Gas erzeugbar ist, aufweisen, beispielsweise einer Speicher mit kompostierten Stoffen oder einen Tank mit Kerosin, JP-8, Schweröl, Benzin oder Diesel. Zusätzlich oder alternativ, kann das Plasmalysesystem einen Speicher mit wasserstoffenthaltendem Gas aufweisen. Zusätzlich oder alternativ, kann das Plasmalysesystem eine Energieanlage zum Bereitstellen von Energie zum koronaentladungsinduzierten Spalten von wasserstoffenthaltenden Gasen in den molekularen Wasserstoff und das wenigstens eine Beiprodukt aufweisen. Zusätzlich oder alternativ, kann das Plasmalysesystem einen Wasserstoffspeicher zum Speichern des molekularen Wasserstoffs aufweisen. Zusätzlich oder alternativ, kann das Plasmalysesystem einen mit molekularem Wasserstoff betreibbaren Antrieb, beispielsweise einen Wasserstoffverbrennungsmotor, aufweisen. Zusätzlich oder alternativ, kann das Plasmalysesystem eine mit molekularem Wasserstoff betreibbare Energieanlage aufweisen.

Der Speicher mit wasserstoffenthaltendem Gas kann mit einer oder mehreren der Plasmalysevorrichtungen verbunden sein. Insbesondere, kann der Speicher mit wasserstoffenthaltendem Gas mit einer Gaszuleitung eines oder mehrerer der Plasmalysevorrichtungen verbunden sein. Der Speicher mit wasserstoffenthaltendem Gas kann beispielsweise mit einem Biogasreaktor, einem Klärwerk, oder einem Erdgasspeicher verbunden sein oder Teil von diesen sein.

Die Energieanlage zum Bereitstellen von Energie zum koronaentladungsinduzierten Spalten von wasserstoffenthaltenden Gasen kann mit dem Hochfrequenzgenerator oder mit den Hochfrequenzgeneratoren verbunden sein, um eine Hochfrequenz-Spannung für die Plasmaelektroden bereitzustellen. Die Energieanlage zum Bereitstellen von Energie kann eine Energieanlage zum Erzeugen von erneuerbarer Energie sein, wie zum Beispiel eine Windenergieanlage, ein Solarenergieanlage, ein Wasserkraftwerk oder ein Biogaskraftwerk.

Die mit molekularem Wasserstoff betreibbare Energieanlage kann mit dem Wasserstoffspeicher oder mit wenigstens einer der Plasmalysevorrichtungen verbunden sein. Die mit molekularem Wasserstoff betreibbare Energieanlage kann beispielsweise eine Brennstoffzelle oder ein Blockheizkraftwerk (BHKW) enthalten. Der molekulare Wasserstoff kann beispielsweise zur Wärmeerzeugung verwendet werden, beispielsweise indem der molekulare Wasserstoff in einem wasserstoffbetriebenen BHKW verwendet wird, um Wärme zu erzeugen.

Das Plasmalysesystem kann eine emissionsfreie Energieerzeugung ermöglichen. Wenn Biogas oder Biomethan aus Biogas als wasserstoffenthaltendes Gas verwendet wird, kann sogar eine Kohlenstoffdioxidsenke erzeugt werden, um so Kohlenstoffdioxid in der Luft und insbesondere der Atmosphäre nachhaltig zu reduzieren. Biogas oder Biomethan aus Biogas kann beispielweise von einem Biogasreaktor bereitgestellt werden. Hierfür können beispielsweise Abfälle, zum Beispiel Speisereste, Gülle, Mist, und nachwachsende Rohstoffe, zum Beispiel Pflanzen oder Pflanzenteile, im Biogasreaktor zu Biogas umgesetzt, insbesondere vergoren, werden.

Das Plasmalysesystem kann in einer ortsfesten Struktur oder einer mobilen Struktur, insbesondere in einem Fahrzeug verwendet werden.

Gemäß einem weiteren Aspekt betrifft die Erfindung eine Verwendung einer Plasmalysevorrichtung gemäß einem der Ansprüche 1 bis 6 oder einer Ausführungsform der Plasmalysevorrichtung zum Spalten von wasserstoffenthaltendem Gas in molekularen Wasserstoff und wenigstens ein Beiprodukt unter Nutzung von in einem Betrieb einer ortsfesten Struktur oder einer mobilen Struktur bereitgestellten wasserstoffenthaltendem Gas.

Anstatt einer Plasmalysevorrichtung können auch mehrere Plasmalysevorrichtungen oder ein Plasmalysesystem gemäß Anspruch 7 oder 8 oder einer anderen Ausführungsform des Plasmalysesystems zum Spalten von wasserstoffenthaltendem Gas in molekularen Wasserstoff und wenigstens ein Beiprodukt unter Nutzung von in einem Betrieb einer ortsfesten Struktur oder einer mobilen Struktur bereitgestellten wasserstoffenthaltendem Gas verwendet werden.

Das wasserstoffenthaltende Gas kann beispielsweise von einer ortsfesten Struktur, wie einem ortsfesten Biogasreaktor oder einem ortsfesten Klärwerk bereitgestellt werden. Die Plasmalysevorrichtung kann beispielsweise auch verwendet werden, um molekularen Wasserstoff für eine mit molekularen Wasserstoff betreibbare Energieanlage, wie eine Brennstoffzelle oder ein BHKW bereitzustellen. Die Plasmalysevorrichtung kann beispielsweise in einem Hotel, einem Einkaufszentrum, einem Laden, einer Fabrik oder einem anderen Gebäude verwendet werden.

Das wasserstoffenthaltende Gas kann auch beispielsweise von einer mobilen Struktur, wie einem Fahrzeug bereitgestellt werden. In anderen Worten kann die Plasmalysevorrichtung auch in einem Fahrzeug verwendet werden. Zum Beispiel kann ein Fahrzeug, beispielsweise ein Kreuzfahrtschiff ein Klärwerk zum Bereitstellen von wasserstoffenthaltendem Gas, z. B. Biogas oder Biomethan aus Biogas, aufweisen. Das wasserstoffenthaltende Gas kann auch von anderen Fahrzeugen, beispielsweise einem Personenkraftwagen oder einem Lastkraftwagen bereitgestellt werden. Hierfür kann beispielweise Benzin oder Diesel in den gasförmigen Aggregatzustand überführt und die Plasmalysevorrichtung mit diesem versorgt werden. Der molekulare Wasserstoff kann auch in einem Speicher, zum Beispiel einen Wasserstoffspeicher gelagert werden, um diesen als Treibstoff für Fahrzeuge, zum Beispiel den Güterverkehr oder Personenverkehr zu verwenden. Ferner kann die Plasmalysevorrichtung verwendet werden, um Biogas, Biomethan aus Biogas oder Erdgas in molekularen Wasserstoff und wenigstens ein Beiprodukt umzuwandeln. Hierbei kann die Plasmalysevorrichtung beispielsweise mit Energie aus einer erneuerbaren Energiequelle versorgt werden, wie zum Beispiel einer Windenergieanlage, einer Solarenergieanlage oder einem Wasserkraftwerk.

Das durch das Spalten von wasserstoffenthaltendem Gas entstehende Beiprodukt kann beispielsweise Kohlenstoff enthalten. Es können diverse Kohlenstoffstrukturen im Beiprodukt enthalten sein, die im Baugewerbe, der Elektronikindustrie und im Leichtbau Verwendung finden können. Ferner können die Kohlenstoffstrukturen auch in Farben und Lacken verwendet werden sowie für die Reifenherstellung.

Der molekulare Wasserstoff und das wenigstens eine Beiprodukt können Zwischenprodukte sein, die in weiteren Arbeitsschritten oder Herstellungsschritten zu einem Folgeprodukt weiterverarbeitet werden. Das Folgeprodukt kann ein weiteres Zwischenprodukt sein oder ein Endprodukt.

Gemäß einem weiteren Aspekt betrifft die Erfindung eine Verwendung des von der Plasmalysevorrichtung gemäß einem der Ansprüche 1 bis 6 oder einer anderen Ausführungsform der Plasmalysevorrichtung hergestellten molekularen Wasserstoffs und/oder des wenigstens einen Beiprodukts zum Herstellen von Folgeprodukten.

Welche Folgeprodukte auf Basis des von der Plasmalysevorrichtung hergestellten molekularen Wasserstoff und/oder des wenigstens einem Beiprodukt hergestellt werden können, hängt unter anderem davon ab, welche Beiprodukte hergestellt werden und welche Wasserstoffausbeute erzielt wird. Dies hängt wiederum davon ab, welche Elemente in welcher Konzentration in dem wasserstoffenthaltenden Gas enthalten sind. Zum Beispiel kann das wasserstoffenthaltende Gas neben Wasserstoff auch Kohlenstoff enthalten. Zusätzlich kann das wasserstoffenthaltende Gas auch Stickstoff oder Edelgase enthalten. Es kann auch Stickstoff oder ein Edelgas neben dem wasserstoffenthaltenden Gas in den Reaktionsraum eingeführt werden, beispielsweise über eine der weiteren Gaszuleitungen.

Das wasserstoffenthaltende Gas kann beispielsweise Methan (CH₄) enthalten. In diesem Fall kann das wenigstens eine Beiprodukt Kohlenstoffstrukturen, beispielsweise Kohlenstoffagglomerate, enthalten. Wenn Methan durch das Plasma geführt wird, können hochwertige Kohlenstoffstrukturen erzeugt werden. Die Qualität der Kohlenstoffstrukturen hängt zusätzlich von den Parametern der Plasmalysevorrichtung während des Herstellungsprozesses ab. Bei geringerem Energieeintrag werden beispielsweise kleinere Kohlenstoffagglomerate erzeugt und eine höhere Wasserstoffausbeute erzielt. Kleinere Kohlenstoffagglomerate sind Kohlenstoffstrukturen mit kleineren Partikelgrößen der Agglomerate, beispielsweise im Bereich von Partikelgrößen unter 200 µm, bevorzugt unter 20µm, die zum Beispiel als Additive verwendet werden können. Mit einem höheren Energieeintrag und beispielsweise einer geringeren Durchflussrate des wasserstoffenthaltenden Gases können auch hochwertigere Kohlenstoffstrukturen, beispielsweise Graphit zum Beispiel in Form von Graphitstiften, erzeugt werden. In diesem Fall ist die Wasserstoffausbeute aber verringert, beispielsweise auf 20 % gegenüber einer maximalen Wasserstoffausbeute.

Die Eigenschaften der Kohlenstoffagglomerate hängen unter anderem von der Partikelgröße der Primärpartikel sowie von der Partikelgröße der Kohlenstoffagglomerate, die von den Primärpartikeln gebildet werden ab. Mit sinkender Partikelgröße der Primärpartikel nimmt die Viskosität zu, nimmt die Dispergierbarkeit ab, nimmt die elektrische Leitfähigkeit zu, nimmt die Farbstärke zu und wird der Farbton brauner. Mit sinkender Partikelgröße der Kohlenstoffagglomerate nimmt die Viskosität ab, nimmt die Dispergierbarkeit ab, nimmt die elektrische Leitfähigkeit ab, nimmt die Farbstärke zu, und wird der Farbton brauner.

Welche Beiprodukte mit welchen Eigenschaften hergestellt werden, hängt insbesondere von Druck, Temperatur, Leistung, Frequenz und Verweilzeit des wasserstoffenthaltenden Gases im Plasma ab. Die Leistung hängt ab von der Stromstärke und Spannung. Die mittlere Partikelgröße hängt zum Beispiel besonders stark von der Stromstärke bei fester Spannung ab.

Das Beiprodukt kann beispielsweise über 95 Gew.-% Kohlenstoffpartikel enthalten. Die mittlere Partikelgröße der Kohlenstoffagglomerate kann beispielsweise zwischen 7,7 µm und 105 µm liegen. Die Kohlenstoffpartikel können Kohlenstoffagglomerate bilden, die zusammen einen porösen Festkörper bilden können. Der poröse Festkörper kann beispielsweise, Porenradien zwischen 0,18 nm und 1,7 nm haben. Porenvolumina können beispielsweise zwischen 0.016 und 0.037 cc/g liegen.

Das Beiprodukt kann in Form eines porösen Festkörpers vorliegen. Das Beiprodukt kann eine Oberfläche zwischen 50 m²/g und 2000 m²/g, bestimmt nach BET-Messung haben. Das Beiprodukt kann beispielsweise Ruß, insbesondere Industrieruß enthalten. Der Ruß kann beispielsweise eine Dibutylphthalat-Absorption (DBPA) gemessen gemäß DIN 53601: 1978-12 zwischen 30 und 130 ml/100g und eine lodzahl von 10 bis 160 mg/g haben.

Wenn Erdgas als wasserstoffenthaltendes Gas bei einer Durchflussrate von ca. 2 l/min. verwendet wird, können beispielsweise als Beiprodukt Kohlenstoffstrukturen mit Partikelgrößen für die Agglomerate von ca. 20 µm und Partikelgrößen der Primärpartikel von ca. 60 nm bei einer spezifischen Oberfläche von 87 m²/g hergestellt werden. Wenn Erdölbegleitgas als wasserstoffenthaltendes Gas bei einer Durchflussrate von ca. 2 l/min. verwendet wird, können beispielsweise als Beiprodukt Kohlenstoffstrukturen mit Partikelgrößen für die Agglomerate von ca. 160 µm und Partikelgrößen der Primärpartikel von ca. 65 nm bei einer spezifischen Oberfläche von 120 m²/g hergestellt werden. Die Verwendung der Plasmalysevorrichtung ermöglicht es größere Agglomerate oder Aggregate aus Kohlenstoff bei kleineren Primärpartikelgrößen gegenüber von kommerziell erhältlichen Flammruß herzustellen.

Ferner hängt auch die Wasserstoffausbeute davon ab, welches wasserstoffenthaltende Gas verwendet wird. Wenn beispielsweise reines Methan als wasserstoffenthaltendes Gas verwendet wird, kann ein Gasstrom mit beispielsweise 98 % molekularem Wasserstoff und 2 % Methan hergestellt werden unter der weiteren Voraussetzung, dass ein Wasserstoffplasma erzeugt wird. Wenn Erdgas als wasserstoffenthaltendes Gas verwendet wird, wird eine demgegenüber geringere Wasserstoffausbeute erreicht. Wenn Erdölbegleitgas als wasserstoffenthaltendes Gas verwendet wird, sinkt die Wasserstoffausbeute weiter, da Erdölbegleitgas eine Zusammensetzung mit weniger Wasserstoffatomen hat und beispielsweise 10 % Stickstoff im Gasgemisch vorhanden sind. Um die Wasserstoffausbeute zu erhöhen, kann ein kaskadierter Abspaltungsprozess durchgeführt werden, in dem das Gasgemisch in mehreren hintereinandergeschalteten Stufen aufgespalten wird und die verschiedenen Gase voneinander getrennt werden.

In anderen Worten, können der hergestellte molekulare Wasserstoff und das wenigstens eine Beiprodukt auch durch mehrere Plasmalysevorrichtungen, beispielsweise mit unterschiedlichen Parametern der Plasmalysevorrichtung, geführt werden. Beispielsweise können die verschiedenen Plasmalysevorrichtungen unterschiedliche Temperaturen im Reaktionsraum haben und/oder die Plasmen verschiedene Temperaturen haben. Beispielsweise kann molekularer Wasserstoff, der durch das Plasma geführt wird die Temperatur erhöhen und ein heißes Wasserstoffplasma erzeugen. Durch die geänderten Temperaturen können unterschiedliche Wasserstoffausbeuten erzielt und Beiprodukte, beispielsweise mit hochwertigeren Strukturen, hergestellt werden. Beispielsweise können Gasströme die aus einer ersten Plasmalysevorrichtung abgeführt werden, auch derart getrennt werden, dass nur ein Teil der Gasströme einer nachfolgenden zweiten Plasmalysevorrichtung zugeführt wird. Dies kann es ermöglichen molekularen Wasserstoff und das wenigstens eine Beiprodukt so zu erzeugen, dass diese für bestimmte Anwendungen oder für die Herstellung bestimmter Folgeprodukte optimiert sind. Beispielsweise kann das wenigstens eine Beiprodukt als Kohlenstoffstruktur in Form von Ruß folgende unterschiedliche ASTM Grade je nach vorgesehenem Anwendungszweck oder Verwendungszweck haben: N110, N115, N121, N220, N234, N330, N326, N339, N347, N375, N539, N550 oder N650.

Die Folgeprodukte des molekularen Wasserstoffs können beispielsweise Ammoniak, Acetylen oder synthetisches Gas, wie zum Beispiel ein Syngas HCO Gemisch, enthalten. Die Folgeprodukte des molekularen Wasserstoffs können wiederum in weiteren Anwendungen zu nachfolgenden Folgeprodukten weiterverarbeitet werden. Beispielsweise kann Ammoniak zur Düngerherstellung verwendet werden. Der molekulare Wasserstoff kann auch zum Beispiel zur Energieerzeugung, Energiespeicherung, als Kraftstoff oder zur Entschwefelung von Kraftstoffen verwendet werden.

Auch die Folgeprodukte des wenigstens einen Beiprodukts sind abhängig vom wasserstoffenthaltendem Gas. Das wenigstens eine neben dem molekularen Wasserstoff hergestellte Beiprodukt hängt von verschiedenen Parametern der Plasmalysevorrichtung während des Herstellungsprozesses ab. Durch Einstellen der Parameter der Plasmalysevorrichtung können unter anderem eine Oberflächengröße und ein Clustern von Kohlenstoffketten eingestellt werden, um so verschiedene Kohlenstoffstrukturen, beispielsweise verschiedene Rußarten, herzustellen. Die Kohlenstoffstrukturen können auch beispielsweise mit einem Plasma, beispielsweise das Plasma der Plasmalysevorrichtung nachbehandelt werden um neue kristalline Strukturen zu erzeugen. Beispielsweise können mehrere Plasmalysevorrichtungen in Reihe angeordnet sein, so dass die in der ersten Plasmalysevorrichtung erzeugten Kohlenstoffstrukturen in einer zweiten Plasmalysevorrichtung nachbehandelt werden können. Es können daher verschiedene Kohlenstoffstrukturen in verschiedenen Formen hergestellt werden. Die Parameter der Plasmalysevorrichtung können während des Herstellungsprozesses beispielsweise so optimiert werden, dass ein bestimmtes Beiprodukt, z.B. mit einer bestimmten Kohlenstoffstruktur, erzeugt wird, die für eine bestimmte Anwendung bzw. Weiterverarbeitung in ein Folgeprodukt optimiert ist.

Folgeprodukte, die aus den Kohlenstoffstrukturen hergestellt werden können oder bei denen die Kohlenstoffstrukturen als Additiv hinzugefügt werden können, können beispielsweise kompostierbare Produkte wie Kaffeekapseln und Behälter, oder auch Futtermittelzusätze, Keramiken, verbesserte Gülle, Aktivkohle für die Abwasserreinigung, Kohle zur Extraktion von Phosphor und anderen chemischen Grundstoffen im Klärschlamm, verbesserte Erde zur verbesserten Speicherung von Nährstoffen, Kohlenstoff-Binder-Mischungen beispielsweise als Baustoffersatz oder Kunststoffersatz, Kohlenstoff-Polymer-Mischungen, Kohlenstoff-Biopolymere, Kohlenstoff-Silikate, Koks, Asphaltmischungen, Zementmischungen, Betonmischungen, Reifen, Farben, Lacke, schwarze Oberflächen, Batterien, Beschichtungen, Toner, Tinte, leitende Tinte, mechanische Gummiprodukte, Fließbänder, Hüllen, Verschlüsse, Kunststoffe, Kabel und Behälter enthalten. Bestimmte Folgeprodukte können zum Beispiel zur Dämmung, Filtration, Verpackung oder für den Leichtbau verwendet werden.

Ein weiteres Folgeprodukte kann beispielsweise ein Methan-Kohlenstoffdioxid-Gemisch (CH₄ + CO₂) sein, dass als Vorprodukt für das Fischer-Tropsch-Verfahren verwendet werden kann, um Kerosin herzustellen. Folgeprodukte können auch synthetische Kraftstoffe enthalten, die auf Basis der von der Plasmalysevorrichtung hergestellten Gasströme synthetisiert werden können. Eine Synthese kann auch in der Plasmalysevorrichtung selbst durchgeführt werden, beispielsweise bei 50 bar. Es können auch Spaltungsschritte mit Syntheseschritten kombiniert werden. Beispielsweise kann in der Plasmalysevorrichtung ein wasserstoffenthaltendes Gas gespalten werden und in einem darauffolgenden Schritt ein anderes wasserstoffenthaltendes Gas synthetisiert werden. Das andere wasserstoffenthaltende Gas kann zum Beispiel zusätzlich Kohlenstoff enthalten und beispielsweise ein synthetischer Treibstoff oder synthetischer Kraftstoff sein.

Gemäß einem weiteren Aspekt betrifft die Erfindung eine Verwendung von in einer Plasmalysevorrichtung gemäß Anspruch 1 bis 6 oder einer anderen Ausführungsform der Plasmalysevorrichtung hergestellten molekularem Wasserstoff für die folgenden Anwendungen:
- als Brennstoff,
- zur Herstellung eines Wasserstoffverbrennungsprodukts,
- als Antriebsmittel,
- zum Betreiben eines wasserstoffbetriebenen Fahrzeug,
- zum Mischen mit Flüssiggas,
- zum Mischen mit Flüssigerdgas (LNG, engl. Liquified Natural Gas),
- zum Mischen mit flüssigem Biomethan (LBM, engl. Liquified Biomethane),
- zum Mischen mit Erdgas,
- zum Mischen mit Methan,
- zum Herstellen von Synthesegas,
- zum Herstellen von synthetischem Kraftstoff,
- zum Herstellen von Ammoniak, der zur Düngerherstellung weiterverwendet werden kann,
- zum Raffinieren von Erdöl,
- zum Hydrieren von chemischen Verbindungen,
- zum Betreiben einer Wasserstoffturbine,
- zum Betreiben einer Brennstoffzelle,
- zum Betreiben einer Kraft-Wärme-Kopplung (KWK bzw. CHP, engl. combined heat and power),
- zum Betreiben eines Blockheizkraftwerks,
- zum Erzeugen von Energie mittels einer Brennstoffzelle,
- zum Erzeugen von Energie und/oder Wärme mittels einer Kraft-Wärme-Kopplung,
- in einer Gasseparationsanlage,
- in einer Gaskompressionsanlage,
- zum Herstellen von synthetischen Rohmaterialien,
- zum Speichern von Energie,
- zum Erzeugen von Wärme,
- zum Erzeugen von Energie.

Schutz ist nur für tatsächlich mit der Plasmalysevorrichtung hergestellten molekularen Wasserstoff beansprucht. In anderen Worten, dies betrifft genau die Situation, in der der molekulare Wasserstoff in der Plasmalysevorrichtung hergestellt wird und dann verwertet wird, nämlich zum Beispiel, indem er für eine bestimmte Anwendung verwendet wird.

Gemäß einem weiteren Aspekt betrifft die Erfindung eine Verwendung von in einer Plasmalysevorrichtung gemäß Anspruch 1 bis 6 oder einer anderen Ausführungsform der Plasmalysevorrichtung hergestelltem Beiprodukt für die folgenden Anwendungen:
- als Reduktionsmittel bei der Herstellung von Stahl,
- als Brennstoff,
- als Adsorptionsmittel, beispielsweise in der Chemie, Medizin, Trinkwasseraufbereitung, Abwasserbehandlung, Lüftungstechnik oder Klimatechnik,
- als Trägermaterial von Katalysatoren für heterogene Katalyse,
- als Grundmaterial zur Herstellung von Kohlenstoffstrukturen,
- als Additiv für die Herstellung von Asphalt,
- als Additiv für die Herstellung von Zement,
- als Additiv für die Herstellung von Beton,
- als Inhaltsstoff eines Wärmeleitmittels, beispielsweise einer Wärmeleitpaste,
- als Aktivkohle zur Abwasserreinigung,
- als Futtermittelzusatz,
- als Additiv zu einem Binder,
- als Additiv zur Erde zum verbesserten Speicherung von Nährstoffen,
- als Kohle zur Extraktion von Phosphor und anderen chemischen Grundstoffen im Klärschlamm,
- als Additiv in Baustoffen,
- als Additiv in Kunststoffen,
- zur Dämmung,
- zur Filtration,
- zur Verpackung,
- für den Leichtbau.

Das Beiprodukt kann auch beispielsweise in der Stahlindustrie, beispielsweise in Hoch- oder Kupolöfen verwendet werden. Schutz ist nur für tatsächlich mit der Plasmalysevorrichtung hergestelltes Beiprodukt beansprucht. In anderen Worten, dies betrifft genau die Situation, in der das Beiprodukt in der Plasmalysevorrichtung hergestellt wird und dann verwertet wird, nämlich zum Beispiel, indem es für eine bestimmte Anwendung verwendet wird.

Gemäß einem weiteren Aspekt betrifft die Erfindung ein Verfahren zum koronaentladungsinduzierten Spalten von wasserstoffenthaltenden Gasen in molekularen Wasserstoff und wenigstens ein Beiprodukt oder zum Herstellen von molekularem Wasserstoff und wenigstens einem Beiprodukt oder zum Herstellen von Folgeprodukten aus dem molekularen Wasserstoff und/oder dem wenigstens einem Beiprodukt. Das Verfahren umfasst die Verfahrensschritte,
- Einführen eines wasserstoffenthaltenden Gases in einen gasdichten Reaktionsraum,
- Erzeugen einer Koronaentladung mittels genau einer mit einer hochfrequenten Wechselspannung betriebenen Plasmaelektrode im Reaktionsraum, wobei der gasdichte Reaktionsraum von einer Wand umschlossen ist, die ausgebildet ist die Plasmaelektrode gegenüber einer Außenseite der Wand elektrisch zu isolieren, wobei durch die Koronaentladung molekularer Wasserstoff und das wenigstens eine Beiprodukt erzeugt werden.

Das Verfahren kann den Schritt: Abführen des molekularen Wasserstoffs und des wenigstens einen Beiprodukts aus dem Reaktionsraum umfassen.

Der molekulare Wasserstoff kann nachfolgend beispielsweise über eine Gastrennung von dem wenigstens einem Beiprodukt abgetrennt werden. Die Gastrennung kann physikalische Trennverfahren umfassen. Beispielsweise können Gastrennungsverfahren wie das Linde-Verfahren, Membranverfahren, Gastrennung mittels Gaszentrifugen, Gastrennung mittels Gaschromatographen, wie der Hochleistungsflüssigkeitschromatographie (HPLC), Adsorptionsverfahren, wie Druckwechsel-Adsorption oder andere Gastrennungsverfahren verwendet werden, um den molekularen Wasserstoff und das wenigstens eine Beiprodukt voneinander zu trennen. Die Gastrennungsverfahren können auch verwendet werden, um verschiedene Beiprodukte voneinander zu trennen. Das aus dem Reaktionsraum abgeführte Gasgemisch kann auch in einer Kaskade von nacheinander ausgeführten Gastrennungen in einzelne Gase aufgetrennt werden.

Das Verfahren kann einen oder mehrere der folgenden Schritte umfassen:
- Abtrennen des molekularen Wasserstoffs von dem wenigstens einem Beiprodukt,
- Verwenden des molekularen Wasserstoffs und/oder des wenigstens einen Beiprodukts in einer nachfolgenden Anwendung, und
- Verwenden des molekularen Wasserstoffs und/oder des wenigstens einen Beiprodukts zur Herstellung eines Folgeprodukts,
- Umsetzen des molekularen Wasserstoffs und/oder des wenigstens einen Beiprodukts zu einem Folgeprodukt,
- Verwenden des molekularen Wasserstoffs und/oder des wenigstens einen Beiprodukts in einem Verfahren zum Erzeugen von Wärme und/oder Energie,

Der molekulare Wasserstoff und/oder das wenigstens eine Beiprodukt kann zum Beispiel verbrannt werden, um Wärme und/oder Energie zu erzeugen.

Das wasserstoffenthaltende Gas kann mittels einer Gaszuleitung für das wasserstoffenthaltende Gas in den Reaktionsraum eingeführt werden. Die hochfrequente Wechselspannung kann der Plasmaelektrode von einem Hochfrequenzgenerator bereitgestellt werden. Der molekulare Wasserstoff kann mittels einer Gasableitung für den molekularen Wasserstoff aus dem Reaktionsraum abgeführt werden.

Das wasserstoffenthaltende Gas kann durch eine Öffnung der Plasmaelektrode hindurch in den Reaktionsraum eingeführt werden.

Das wasserstoffenthaltende Gas kann Methan und/oder Schwefelwasserstoff enthalten. Das wasserstoffenthaltende Gas kann auch zum Beispiel Erdgas, Erdölbegleitgas, Naturgas, Ammoniak, und/oder Biogas enthalten. Alternativ oder zusätzlich kann das wasserstoffenthaltende Gas auch in den gasförmigen Aggregatzustand überführtes Cyclohexan, Heptan, Toluol, Benzin, JP-8 und/oder Diesel enthalten. Wenn das wasserstoffenthaltende Gas Biogas enthält, kann eine verfahrenstechnische Kohlenstoffdioxidsenke erzeugt werden. Dies kann zum Beispiel Kohlenstoffdioxid der Luft schneller entziehen als ein Aufforsten der Wälder.

Das Verfahren kann den Schritt umfassen:
- Filtern des Beiprodukts aus einem Gasstrom aus molekularem Wasserstoff und Beiprodukt.

Das Beiprodukt kann festes Beiprodukt, beispielsweise in Form von Partikel enthalten. Feste Beiprodukt kann beispielsweise mittels eines Partikelfilters gefiltert werden. Ferner kann Beiprodukt gasförmiges Beiprodukt enthalten. Dieses kann beispielsweise mittels einer Membran oder eines Adsorbers gefiltert werden.

Das Verfahren kann die Schritte umfassen:
- Sammeln von durch das Spalten des wasserstoffenthaltenden Gases entstehenden Gasen in der Gasableitung für den molekularen Wasserstoff und/oder einem Reservoir für den molekularen Wasserstoff,
- Trennen der entstehenden Gase über einen mehrstufigen Membranprozess, über die Verwendung selektiver Adsorptionsverfahren und/oder einem oder mehreren anderen Gastrennungsverfahren.

Dies ermöglicht eine einfache Trennung der entstehenden Gase und damit auch ein Sammeln von molekularem Wasserstoff und gasförmigen Beiprodukt. Alternativ können auch andere Gastrennungsverfahren verwendet werden.

Bei einem selektiven Adsorptionsverfahren wird z.B. das aus dem Spalten des wasserstoff enthaltenden Gas entstehende Gas über ein Reservoir geleitet, in dem sich mindestens ein Adsorber befindet. An diesem kann beispielweise eine Gasart eines gasförmigen Beiprodukts über Adsorption gebunden werden. Eine andere Gasart, zum Beispiel der molekulare Wasserstoff kann somit zunächst alleine freigesetzt werden. Die adsorbierte Gasart kann dann in einem weiteren Schritt vom Adsorber gelöst werden, beispielsweise über eine Druckbeaufschlagung oder ein thermisches Lösen.

Das Verfahren kann einen Schritt umfassen:
- Abführen von festem Beiprodukt aus dem Reaktionsraum.

Festes Beiprodukt kann beispielsweise mittels einer Ableitung für festes Beiprodukt aus dem Reaktionsraum abgeführt werden. Hierfür kann zum Beispiel eine Abführeinrichtung vorgesehen sein.

Das Verfahren kann den Schritt umfassen:
- Reinigen des Reaktionsraums, um festes Beiprodukt aus dem Reaktionsraum zu entfernen.

Reinigen des Reaktionsraums kann insbesondere ein mechanisches Entfernen von festem Beiprodukt umfassen, beispielsweise mittels eines Reinigungselements oder mittels Ausblasen des Reaktionsraums mittels Gaspulsen.

Gemäß einem weiteren Aspekt betrifft die Erfindung eine Verwendung des molekularen Wasserstoffs herstellbar oder hergestellt gemäß dem Verfahren gemäß Anspruch 13 oder einer Ausführungsform des Verfahrens für eine der folgenden Anwendungen:
- als Brennstoff,
- zur Herstellung eines Wasserstoffverbrennungsprodukts,
- als Antriebsmittel,
- zum Betreiben eines wasserstoffbetriebenen Fahrzeug,
- zum Mischen mit Flüssiggas,
- zum Mischen mit Flüssigerdgas,
- zum Mischen mit flüssigem Biomethan,
- zum Mischen mit Erdgas,
- zum Mischen mit Methan,
- zum Herstellen von Synthesegas,
- zum Herstellen von synthetischem Kraftstoff,
- zum Herstellen von Ammoniak, der zur Düngerherstellung weiterverwendet werden kann,
- zum Raffinieren von Erdöl,
- zum Hydrieren von chemischen Verbindungen,
- zum Betreiben einer Wasserstoffturbine,
- zum Betreiben einer Brennstoffzelle,
- zum Betreiben einer Kraft-Wärme-Kopplung,
- zum Betreiben eines Blockheizkraftwerks,
- zum Erzeugen von Energie mittels einer Brennstoffzelle,
- zum Erzeugen von Energie und/oder Wärme mittels einer Kraft-Wärme-Kopplung,
- in einer Gasseparationsanlage,
- in einer Gaskompressionsanlage,
- zum Herstellen von synthetischen Rohmaterialien,
- zum Speichern von Energie,
- zum Erzeugen von Wärme,
- zum Erzeugen von Energie.

Der molekulare Wasserstoff kann beispielsweise für die Mobilität, wie zum Beispiel zum Betreiben eines Fahrzeugs, verwendet werden. Beim Verbrennen von molekularem Wasserstoff entsteht Wasser. Dies ermöglicht es molekularen Wasserstoff ohne Erzeugung von Kohlenstoffdioxid zum Betreiben von diversen Vorrichtung, insbesondere Fahrzeugen, zu verbrennen.

Gemäß einem weiteren Aspekt betrifft die Erfindung eine Verwendung des wenigstens einen Beiprodukts herstellbar oder hergestellt gemäß dem Verfahren gemäß Anspruch 13 oder einer Ausführungsform des Verfahrens für eine der folgenden Anwendungen:
- als Reduktionsmittel bei der Herstellung von Stahl,
- als Brennstoff,
- als Adsorptionsmittel, beispielsweise in der Chemie, Medizin, Trinkwasseraufbereitung, Abwasserbehandlung, Lüftungstechnik oder Klimatechnik,
- als Trägermaterial von Katalysatoren für heterogene Katalyse,
- als Grundmaterial zur Herstellung von Kohlenstoffstrukturen,
- als Additiv für die Herstellung von Asphalt,
- als Additiv für die Herstellung von Zement,
- als Additiv für die Herstellung von Beton,
- als Inhaltsstoff eines Wärmeleitmittels, beispielsweise einer Wärmeleitpaste,
- als Aktivkohle zur Abwasserreinigung,
- als Futtermittelzusatz,
- als Additiv zu einem Binder,
- als Additiv zur Erde zum verbesserten Speicherung von Nährstoffen,
- als Kohle zur Extraktion von Phosphor und anderen chemischen Grundstoffen im Klärschlamm,
- als Additiv in Baustoffen,
- als Additiv in Kunststoffen,
- zur Dämmung,
- zur Filtration,
- zur Verpackung,
- für den Leichtbau.

Ausführungsbeispiele sind auch den Ansprüchen zu entnehmen.

Nachfolgend werden weitere Ausführungsbeispiele der Vorrichtung und des Verfahrens anhand der Zeichnungen beschrieben. Es zeigen:
Fig. 1 Eine schematische Darstellung eines Ausführungsbeispiels einer Plasmalysevorrichtung zum koronaentladungsinduzierten Spalten von wasserstoffenthaltenden Gasen in molekularen Wasserstoff und wenigstens ein Beiprodukt gemäß dem ersten Aspekt der Erfindung;
Fig. 2 Eine fotografische Darstellung einer während des Betriebs der Plasmalysevorrichtung der Fig. 1 entstehenden Kohlenstoffstruktur an der Spitze der Plasmaelektrode der Plasmalysevorrichtung;
Fig. 3 Eine fotografische Darstellung einer Koronaentladung an der Plasmaelektrode im Reaktionsraum der Plasmalysevorrichtung der Fig. 1;
Fig. 4 Eine schematische Darstellung eines Ausführungsbeispiels eines Plasmalysesystems zum koronaentladungsinduzierten Spalten von wasserstoffenthaltenden Gasen in molekularen Wasserstoff und wenigstens ein Beiprodukt gemäß einem weiteren Aspekt der Erfindung;
Fig. 5 Eine schematische Darstellung eines Flussdiagramms eines Ausführungsbeispiels eines Verfahrens zum koronaentladungsinduzierten Spalten von wasserstoffenthaltenden Gasen in molekularen Wasserstoff und wenigstens ein Beiprodukt gemäß einem weiteren Aspekt der Erfindung;
Fig. 6 Eine schematische Darstellung eines weiteren Ausführungsbeispiels einer Plasmalysevorrichtung zum koronaentladungsinduzierten Spalten von wasserstoffenthaltenden Gasen in molekularen Wasserstoff und wenigstens ein Beiprodukt gemäß dem ersten Aspekt der Erfindung;
Fig. 7 Eine schematische Darstellung eines weiteren Ausführungsbeispiels eines Plasmalysesystems gemäß einem weiteren Aspekt der Erfindung;
Fig. 8 Eine schematische Darstellung eines weiteren Ausführungsbeispiels einer Plasmalysevorrichtung zum koronaentladungsinduzierten Spalten von wasserstoffenthaltenden Gasen in molekularen Wasserstoff und wenigstens ein Beiprodukt gemäß dem ersten Aspekt der Erfindung.

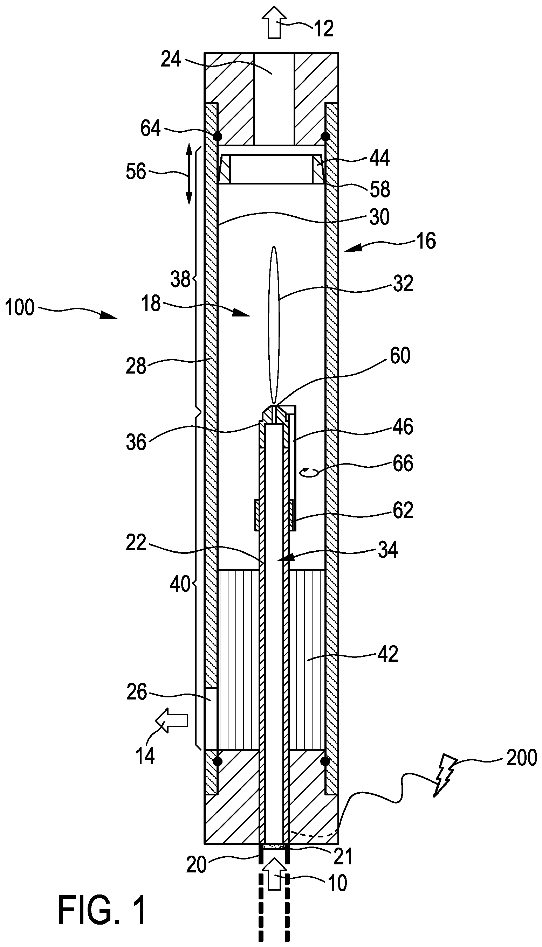

Figur 1 zeigt eine schematische Darstellung eines Ausführungsbeispiels einer Plasmalysevorrichtung 100 zum koronaentladungsinduzierten Spalten von wasserstoffenthaltenden Gasen 10 in molekularen Wasserstoff 12 und wenigstens ein Beiprodukt 14. In diesem Ausführungsbeispiel ist das Beiprodukt 14 fest. Das wasserstoffenthaltende Gas 10 kann beispielsweise Methan enthalten, das in molekularen Wasserstoff 12 und festen Kohlenstoff als Beiprodukt 14 gespalten werden kann. In einem Ausführungsbeispiel kann beispielsweise mit der Plasmalysevorrichtung Methan in elementaren Kohlenstoff und ein Gas mit 80 % molekularen Wasserstoff, 10 % Acetylen und 10 % Rest-Methan umgewandelt werden. In anderen Ausführungsbeispielen ist auch eine nahezu vollständig Umwandlung des Methans in Kohlenstoff und molekularen Wasserstoff möglich.

Die Plasmalysevorrichtung 100 hat ein Gehäuse 16, das einen Reaktionsraum 18 gasdicht umschließt. Ferner hat die Plasmalysevorrichtung 100 eine Gaszuleitung 20, genau eine Plasmaelektrode 22, eine Gasableitung 24 und eine Ableitung 26. Die Ableitung 26 ist optional. Anstatt der Ableitung 26 kann zum Beispiel auch eine Klappe im Boden der Plasmalysevorrichtung vorgesehen sein, um das feste Beiprodukt 14 abzuführen (nicht gezeigt). In anderen Ausführungsbeispielen kann das feste Beiprodukt beispielsweise auch über die Gasableitung abgeführt werden.

Die Plasmaelektrode 22 ist mit einem Hochfrequenzgenerator 200 verbunden. In diesem Ausführungsbeispiel ist der Hochfrequenzgenerator 200 eine separate Einheit, die mit der Plasmalysevorrichtung 100 verbunden ist. In anderen Ausführungsbeispielen kann der Hochfrequenzgenerator auch Teil der Plasmalysevorrichtung sein (nicht gezeigt). Der Hochfrequenzgenerator 200 erzeugt eine hochfrequente Wechselspannung für die Plasmaelektrode 22 und kontaktiert die Plasmaelektrode 22 von außerhalb des Gehäuses 16. Der Hochfrequenzgenerator 200 kann ein Anpassungsnetzwerk aufweisen, um eine Impedanzanpassung durchzuführen (nicht gezeigt). Das Anpassungsnetzwerk kann auch Teil der Plasmalysevorrichtung sein. Der Hochfrequenzgenerator 200 stellt in diesem Ausführungsbeispiel eine Leistung zwischen 30 W und 50 kW bereit und hat eine Ausgangsimpedanz von 50 Ohm. Der Hochfrequenzgenerator stellt die hochfrequente Wechselspannung mit einer Frequenz im Bereich von 1 MHz bis 40 MHz, insbesondere im Bereich von 10 MHz bis 20 MHz, zum Beispiel mit einer Frequenz von 13,56 MHz bereit.

Der Reaktionsraum 18 hat in diesem Ausführungsbeispiel eine nicht-geerdete, nicht-metallische Wand 28. In diesem Ausführungsbeispiel ist die Wand aus Quarzglas mit einer Wandstärke von 4 mm. In anderen Ausführungsbeispielen kann auch ein anderes Material, zum Beispiel eine Keramik, wie Macor verwendet werden und eine andere Wandstärke, zum Beispiel für Quarzglas mit mindestens 4 mm. Ferner kann auch eine metallische Wand mit einer nicht-metallischen Isolierung auf deren Innenseite gegenüber der Plasmaelektrode, z.B. mit einer nicht-metallischen Isolationsbeschichtung, vorgesehen sein, um die Plasmaelektrode gegenüber einer Außenseite der Wand elektrisch zu isolieren. Eine Innenseite 30 der Wand 28 des Reaktionsraums 18 bildet im Betrieb der Plasmalysevorrichtung 100 spontan eine Gegenelektrode aus. Ferner ist der Reaktionsraum 18 gasdicht ausgeführt, so dass Gas nur durch die Gaszuleitung 20 in den Reaktionsraum 18 eingeführt und über die Gasableitung 24 aus dem Reaktionsraum 18 abgeführt werden kann. In der Gaszuleitung 20 ist in diesem Ausführungsbeispiel zusätzlich ein Partikelfilter 21 angeordnet, der feste Partikel aus dem wasserstoffenthaltenden Gas 10 herausfiltert.

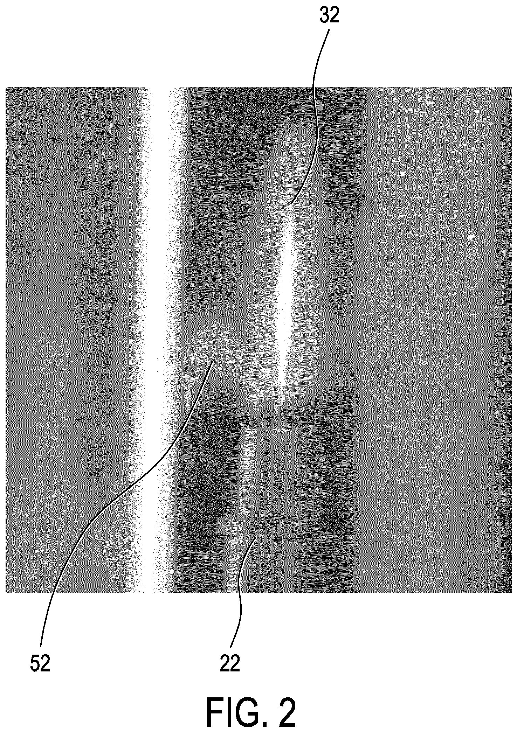

Die Plasmaelektrode 22 ist entlang einer zentralen Längsachse der Plasmalysevorrichtung 100 angeordnet, so dass sie in diesem Ausführungsbeispiel der Gasableitung 24 gegenüberliegt. Die Wand 28 des Reaktionsraums 18 ist koaxial zur Plasmaelektrode 22 angeordnet. Die Plasmaelektrode 22 dient zum Erzeugen von Koronaentladungen 32 im Reaktionsraum 18 mittels der hochfrequenten Wechselspannung (vgl. Fig. 2). Die Plasmaelektrode 22 hat in diesem Ausführungsbeispiel eine Öffnung 34, die mit der Gaszuleitung 20 verbunden ist. Die Gaszuleitung 20 führt das wasserstoffenthaltende Gas 10 durch die Öffnung 34 der Plasmaelektrode 22 hindurch in den Reaktionsraum 18. In diesem Ausführungsbeispiel ist in die Öffnung 34 der Plasmaelektrode 22 eine Düse 36 eingeschraubt, die somit einen Teil der Plasmaelektrode 22 bildet. Die Plasmaelektrode 22 ist aus Edelstahl und enthält ein Aluminiumdrehteil zum Einschrauben der Düse 36. Die Düse 36 ist eine FDM-Druckerdüse aus Messing und Edelstahl.

Die Plasmalysevorrichtung 100 dient zur Gasprozessierung mittels eines von der Koronaentladung 32 ausgebildeten nicht-thermischen Plasmas. Hierfür wird das wasserstoffenthaltende Gas 10 durch die Plasmaelektrode 22 mittels deren Düse 36 in den Reaktionsraum 18 gedüst. An der Plasmaelektrode 22 liegt die hochfrequente Wechselspannung an, die eine Koronaentladung 32 erzeugt. Die Plasmalysevorrichtung 100 kann zum Beispiel wasserstoffenthaltendes Gas 10 spalten, das im Wesentlichen Methan enthält. Durch den Kontakt mit dem nicht-thermischen Plasma, wird das Methan - unter Sauerstoffabschluss, d.h. im gasdichten Reaktionsraum 18 - in elementaren, pulverförmigen Kohlenstoff 14 und molekularen Wasserstoff 12 getrennt. Der anfallende molekulare Wasserstoff 12 ist gasförmig und der Kohlenstoff 14 fällt als Feststoff aus.

In diesem Ausführungsbeispiel ist die Wand 28 des Reaktionsraums 18 gleichzeitig die Außenwand des Gehäuses 16. In anderen Ausführungsbeispielen kann der Reaktionsraum auch innerhalb des Gehäuses angeordnet sein und es können mehrere Wände zwischen dem Reaktionsraum und der Umgebung vorgesehen sein.

Die Gasableitung 24 dient zum Abführen des molekularen Wasserstoffs 12 aus dem Reaktionsraum 18. Der molekulare Wasserstoff 12 ist typischerweise mit anderen Gasen, wie zum Beispiel nicht umgewandelten Methan gemischt, da in der Koronaentladung 32 eine unvollständige Umwandlung des wasserstoffenthaltenden Gases 10 in molekularen Wasserstoff 12 erfolgen kann und somit Restbestandteile des wasserstoffenthaltenden Gases 10 vorhanden sein können und weitere gasförmige Beiprodukte entstehen können.

Die Ableitung 26 dient zum Abführen des festen Beiprodukts 14 aus dem Reaktionsraum 18.

Der Reaktionsraum 18 ist in diesem Ausführungsbeispiel in eine Hauptkammer 38 und eine Nebenkammer 40 unterteilt. Die Plasmaelektrode 22 ist relativ zur Hauptkammer 38 derart angeordnet, dass die Koronaentladung 32 in der Hauptkammer 38 zündet. Die Nebenkammer 40 ist unterhalb der Hauptkammer 38 angeordnet, so dass festes Beiprodukt 14 in die Nebenkammer 40 herabfallen kann. In diesem Ausführungsbeispiel enthält die Nebenkammer 40 eine Abführeinrichtung in Form eines Exzenters 42, der das feste Beiprodukt 14 aus dem Reaktionsraum 18 abführt, ohne dass Gas über den Exzenter 42 in den Reaktionsraum 18 eindringen kann. In anderen Ausführungsbeispielen kann die Abführeinrichtung auch eine Zellradschleuse, eine Schnecke oder andere Abführelemente enthalten. Die Abführeinrichtung kann auch in der Ableitung angeordnet sein oder es können Abführeinrichtungen in der Nebenkammer und der Ableitung angeordnet sein.

Der Reaktionsraum 18 ist so ausgestaltet, dass festes Beiprodukt aus der Hauptkammer 38 in die Nebenkammer 40 fallen kann, so dass eine Störung der Koronaentladung 32 durch das feste Beiprodukt 14 verringert werden kann. Hierfür ist ein Abstand der Wand 28 des Reaktionsraums 18 zur Plasmaelektrode 22 von mindestens 40 mm vorgesehen. Dies vermindert zudem das Risiko eines Überschlags. Ferner kann hierdurch ein Absinken der Temperatur an der Innenseite 30 der Wand 28 erreicht werden. Die Temperatur an der Innenseite 30 der Wand 28 kann beispielsweise bis zu 800°C betragen.

Die Plasmalysevorrichtung 100 ist so dimensioniert, dass wasserstoffenthaltendes Gas 10 mit einer Durchflussrate zwischen 1 l/min und 100 l/min in den Reaktionsraum 18 eingeführt werden kann. In diesem Ausführungsbeispiel wird wasserstoffenthaltendes Gas 10 mit einer Durchflussrate zwischen 1 l/min und 2 l/min in den Reaktionsraum 18 eingeführt. In anderen Ausführungsbeispielen kann die Plasmalysevorrichtung auch mit einer anderen Durchflussrate betrieben werden.

Der Reaktionsraum 18 enthält zudem zwei Reinigungselemente 44 und 46 zum Entfernen des festen Beiprodukts 14. Das feste Beiprodukt 14 kann beispielsweise in Form von festem Kohlenstoff, Kohlenstoffstrukturen 48 ausbilden, die sich von der Düse 36 der Plasmaelektrode 22 zur Innenseite 30 der Wand 28 des Reaktionsraums 18 erstrecken (vgl.

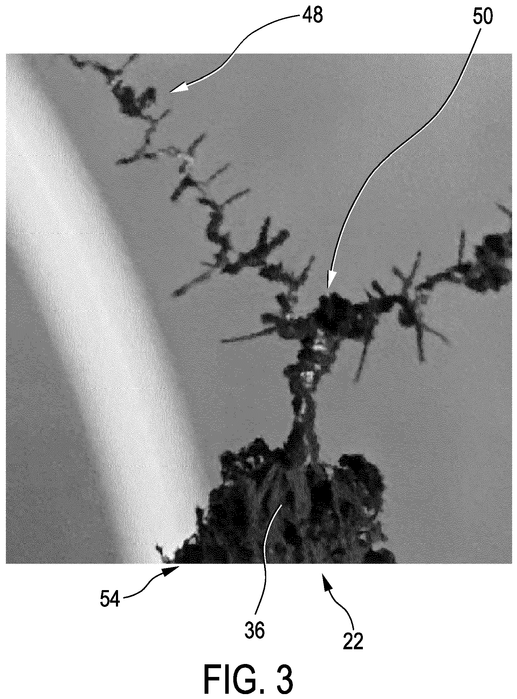

Fig. 3). Die Kohlenstoffstrukturen 48 können sich beispielsweise mit etwas Entfernung zur Düse 36 an der Stelle 50 aufgabeln. Dies ist zum Beispiel möglich, wenn das Plasma der Koronaentladung 32 einen Seitenarm 52 ausbildet der sich von der Plasmaelektrode 22 in Richtung der Innenseite 30 der Wand 28 des Reaktionsraums 18 erstreckt (vgl. Fig. 2). Ferner kann die Plasmaelektrode 22 mit einer Kohlenstoffschicht 54 oder Schicht aus anderem festen Beiprodukt 14 zugesetzt werden.

Das Reinigungselement 44 dient dazu die Innenseite 30 der Wand 28 zu reinigen. Hierfür ist das Reinigungselement 44 ringförmig ausgebildet, wobei eine Öffnung in ihrer Mitte einen größeren Innendurchmesser hat als der Außendurchmesser der Plasmaelektrode 22. Das Reinigungselement 44 ist entlang einer Längsachse 56 auf der Innenseite 30 der Wand 28 verfahrbar, so dass einerseits an der Innenseite 30 der Wand 28 angelagerter Kohlenstoff entfernt werden kann, als auch die Kohlenstoffstrukturen 48 aufgebrochen werden können. In diesem Ausführungsbeispiel hat das Reinigungselement 44 an seiner Unterseite eine Kante 58 zum besseren Aufbrechen von Kohlenstoffstrukturen 48 oder anderem an der Innenseite 30 der Wand 28 angelagertem festen Beiprodukt 14. Der Kohlenstoff oder anderes festes Beiprodukt, das aus der Hauptkammer 38 entfernt wird, fällt in die Nebenkammer 40 herab und kann von dort mittels des Exzenters 42 und der Ableitung 26 aus der Plasmalysevorrichtung 100 abgeführt werden.

Das Reinigungselement 46 ist an der Plasmaelektrode 22 angeordnet und dient dazu die Kohlenstoffschicht 54 von der Plasmaelektrode 22 zu entfernen. Das Reinigungselement 46 hat eine Kante 60 zum Entfernen von festem Beiprodukt 14 und der Kohlenstoffschicht 54 nahe an der Mündung der Düse 36 der Plasmaelektrode 22. Das Reinigungselement 46 ist zudem an der Plasmaelektrode 22 mit einem Gleitring 62 befestigt, so dass das Reinigungselement 46 relativ um die Längsachse der Plasmaelektrode 22 herum verfahrbar ist und so die Kohlenstoffschicht 54 entfernen kann.

In diesem Ausführungsbeispiel ist zudem vorgesehen, dass sich die Plasmaelektrode 22 relativ zu der Wand 28 um ihre gemeinsame zentrale Längsachse dreht. Hierfür sind Gleitdichtringe 64 am oberen und unteren Ende des Reaktionsraums 18 bzw. am oberen Ende der Hauptkammer 38 und am unteren Ende der Nebenkammer 40 vorgesehen, die ein relatives Drehen 66 der Plasmaelektrode 22 zur Wand 28 ermöglichen. Zudem ist ein Antrieb zum automatischen Drehen der Plasmaelektrode 22 relativ zur Wand 28 vorgesehen (nicht gezeigt). In diesem Ausführungsbeispiel wird die Plasmaelektrode 22 gedreht. In anderen Ausführungsbeispielen kann auch anstatt dessen oder zusätzlich die Wand 28 um die Plasmaelektrode 22 herum gedreht werden.

Das Reinigungselement 46 ist in diesem Ausführungsbeispiel mit der Wand 28 fest verbunden, so dass sich die Plasmaelektrode 22 auch zu diesem relativ dreht bzw. relativ zu dem Reinigungselement 46 verfahren werden kann. Alternativ, kann auch das Reinigungselement 46 um die Plasmaelektrode drehbar sein und die Plasmaelektrode 22 fest (nicht gezeigt).

In diesem Ausführungsbeispiel hat die Plasmaelektrode einen Außendurchmesser von 8 mm und die Öffnung der Düse hat einen Durchmesser von 0,4 mm. In anderen Ausführungsbeispielen kann der Außendurchmesser der Plasmaelektrode auch beispielsweise zwischen 4 mm und 16 mm betragen und die Öffnung der Düse der Plasmaelektrode kann einen Durchmesser zwischen 0,1 mm und 1 mm haben. Die Plasmaelektrode hat in diesem Ausführungsbeispiel eine Länge von 150 mm. In anderen Ausführungsbeispiel kann die Plasmaelektrode auch zum Beispiel eine andere Länge, beispielsweise zwischen 50 mm und 300 mm haben.

Der Reaktionsraum 18 ist für Drücke bis zu 1 bar Überdruck druckfest.

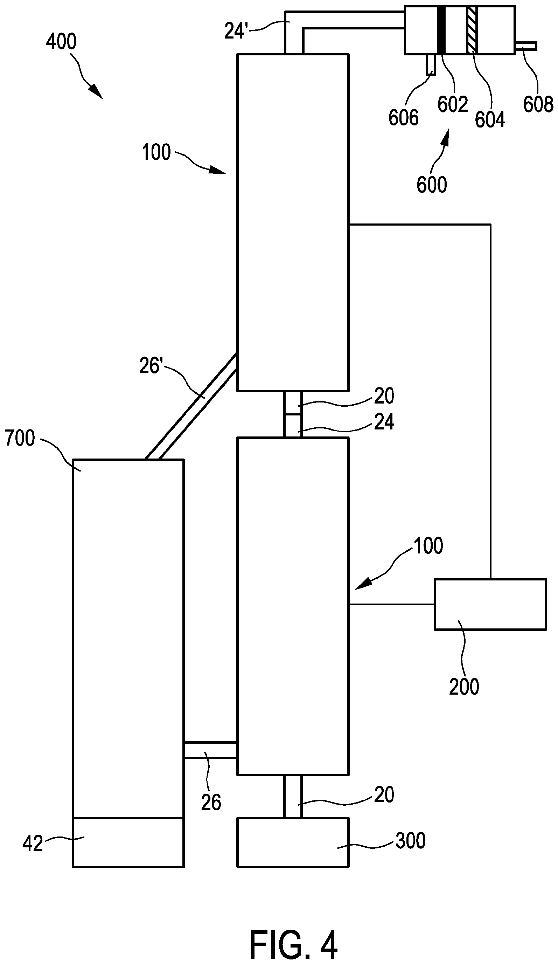

Fig. 4 zeigt ein Ausführungsbeispiel eines Plasmalysesystems 400 zum koronaentladungsinduzierten Spalten von wasserstoffenthaltenden Gasen in molekularen Wasserstoff und wenigstens ein Beiprodukt. Das Plasmalysesystem 400 hat zwei hintereinander in Reihe angeordnete Plasmalysevorrichtungen 100, wie sie in Fig. 1 gezeigt sind. In anderen Ausführungsbeispielen kann das Plasmalysesystem auch eine andere Anzahl an Plasmalysevorrichtungen enthalten. Die Plasmalysevorrichtungen können auch parallel zueinander angeordnet sein. Die Gasableitungen der parallel angeordneten Plasmalysevorrichtungen können beispielsweise in ein gemeinsames Reservoir oder eine gemeinsame Gasableitung münden.

Das Plasmalysesystem 400 enthält einen Hochfrequenzgenerator 200, einen Gastank 300 und zwei Reservoirs 600 und 700. In anderen Ausführungsbeispielen können auch mehrere Hochfrequenzgeneratoren, beispielsweise für jede Plasmalysevorrichtung ein eigener Hochfrequenzgenerator vorgesehen sein.

Im Gastank 300 wird ein wasserstoffenthaltendes Gas bereitgestellt. In diesem Ausführungsbeispiel wird Erdgas als wasserstoffenthaltendes Gas verwendet. Dieses wird über die Gaszuleitung in eine erste Plasmalysevorrichtung 100 geleitet, die das Erdgas in molekularen Wasserstoff und weitere gasförmige und feste Beiprodukte, insbesondere Kohlenstoff spaltet, wie es für Fig. 1 beschrieben ist. Der feste Kohlenstoff wird über die Ableitung 26 in das Reservoir 700 abgeführt und kann von dort über einen Exzenter 42 entnommen werden. Der molekulare Wasserstoff und die weiteren gasförmigen Beiprodukte werden über die Gasableitung 24 in die Gaszuleitung 20 der nachfolgenden Plasmalysevorrichtung 100 geleitet. Dort wird das gasförmige Beiprodukt weiter gespalten in weiteren molekularen Wasserstoff, weiteres gasförmiges Beiprodukt und festes Beiprodukt, insbesondere Kohlenstoff. Das feste Beiprodukt wird über die Ableitung 26' in das Reservoir 700 abgeführt. In diesem Fall ist die Ableitung 26' angeschrägt, so dass festes Beiprodukt aus der Plasmalysevorrichtung 100 in das Reservoir 700 herunterrutschen kann.

Der molekulare Wasserstoff und das weitere gasförmige Beiprodukt werden über die Gasableitung 24' in das Reservoir 600 abgeführt.

Im Reservoir 600 ist eine Membran 602 und ein selektiver Adsorber 604 angeordnet. Zudem führen zwei weitere Gasableitungen 606 und 608 aus dem Reservoir heraus, die dafür vorgesehen sind getrenntes Gas aus dem Reservoir 600 abzuführen. Das Reservoir kann auch Teil einer Plasmalysevorrichtung sein (nicht gezeigt). Membranen und selektive Adsorber können auch in einer Gasableitung einer Plasmalysevorrichtung angeordnet sein (nicht gezeigt).

Im Reservoir 600 wird gasförmiges Beiprodukt, zum Beispiel nicht umgewandeltes Methan, vom molekularen Wasserstoff aus dem Gasgemisch aus molekularem Wasserstoff und gasförmigen Beiprodukt abgetrennt. Dies erfolgt in diesem Ausführungsbeispiel über einen zweistufigen Prozess mit der Membran 602 und dem selektiven Adsorber 604. Methan kann die Membran 602 nicht passieren und wird über die Gasableitung 606 abgeführt. Weiteres gasförmiges Beiprodukt wird vom selektiven Adsorber 604 adsorbiert, so dass im Wesentlichen nur molekularer Wasserstoff über die Gasableitung 608 abgeführt wird. In diesem Ausführungsbeispiel wird als Membran eine Polymermembran verwendet. Als Adsorber wird beispielsweise ZSM-5 verwendet. In anderen Ausführungsbeispielen können auch mehrere Membranen und/oder mehrere Adsorber verwendet werden. In anderen Ausführungsbeispielen können auch andere Membranen und/oder Adsorber verwendet werden.

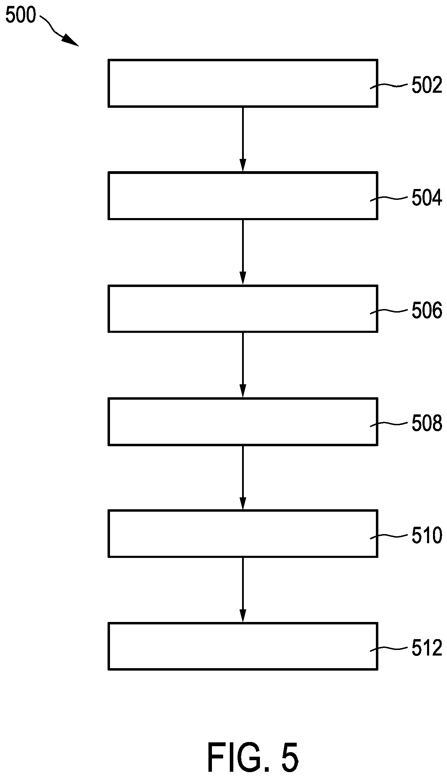

Fig. 5 zeigt eine schematische Darstellung eines Flussdiagramms eines Ausführungsbeispiels eines Verfahrens 500 zum koronaentladungsinduzierten Spalten von wasserstoffenthaltenden Gasen in molekularen Wasserstoff und wenigstens ein Beiprodukt gemäß einem weiteren Aspekt der Erfindung.

In Schritt 502 wird wasserstoffenthaltendes Gas in einen gasdichten Reaktionsraum mit einer nicht-geerdeten, nicht-metallischen Wand eingeführt. In anderen Ausführungsbeispielen kann auch eine andere Art von Wand vorgesehen sein, die die Plasmaelektrode gegenüber der Außenseite der Wand des Reaktionsraums elektrisch isoliert. In diesem Ausführungsbeispiel erfolgt das Einführen des wasserstoffenthaltenden Gases in den Reaktionsraum durch eine Öffnung einer Plasmaelektrode hindurch in den Reaktionsraum. Insbesondere hat die Plasmaelektrode eine Düse, über die das wasserstoffenthaltende Gas in den Reaktionsraum eingedüst wird.

In Schritt 504 wird eine Koronaentladung mittels der Plasmaelektrode im Reaktionsraum erzeugt. Die Plasmaelektrode wird dafür mit einer hochfrequenten Wechselspannung von einem Hochfrequenzgenerator versorgt. Es ist genau eine Plasmaelektrode vorgesehen und eine Innenseite der Wand des Reaktionsraums bildet spontan im Betrieb eine Gegenelektrode aus, ohne dass elektrische Ströme abgeleitet werden, d.h., die Wand ist nicht geerdet bzw. ohne Erdung.

In Schritt 506 wird molekularer Wasserstoff und das wenigstens eine Beiprodukt aus dem Reaktionsraum abgeführt. In diesem Ausführungsbeispiel wird als wasserstoffenthaltendes Gas Erdgas verwendet, das hauptsächlich Methan und daneben unter anderem Schwefelwasserstoff enthält. In anderen Ausführungsbeispielen kann auch ein anderes wasserstoffenthaltendes Gas verwendet werden, beispielsweise auch ein bei Raumtemperatur flüssiger wasserstoffenthaltender Stoff, der in den gasförmigen Aggregatzustand überführt wurde. Methan wird in molekularen Wasserstoff und pulverförmigen Kohlenstoff als festes Beiprodukt gespalten. Das feste Beiprodukt kann auch zum Beispiel elementaren Kohlenstoff, Kohlenstoffnanoröhren, Fullerene, Kohlenstoffnanokegel oder andere Kohlenstoffstrukturen enthalten. Der molekulare Wasserstoff ist gasförmig und wird über eine Gasableitung abgeführt. Der Kohlenstoff wird über eine Ableitung abgeführt. In diesem Ausführungsbeispiel fällt der Kohlenstoff vom Ort der Koronaentladung nach unten und wird dann über die Ableitung abgeführt. Alternativ oder zusätzlich können auch Kohlenstoffpartikel über die Gasableitung abgeführt und in einem Partikelfilter aus dem aus dem Reaktionsraum geführten Gasstrom gefiltert werden.

In Schritt 508 wird der Reaktionsraum gereinigt, um festes Beiprodukt aus dem Reaktionsraum zu entfernen. Schritt 508 ist optional. Der Kohlenstoff kann während des Betriebs Kohlenstoffstrukturen ausbilden, die sich von der Plasmaelektrode bis an die Innenseite der Wand des Reaktionsraums erstrecken können. Zudem kann sich Kohlenstoff an der Innenseite der Wand des Reaktionsraums ablagern. Hierfür kann vorgesehen werden das feste Beiprodukt mechanisch mit Hilfe eines oder mehrerer Reinigungselemente zu entfernen. Alternativ, kann auch die Durchflussrate des zugeführten wasserstoffenthaltenden Gases erhöht werden, um Kohlenstoffstrukturen aufzubrechen bzw. deren Ausbildung zu verhindern und somit den Reaktionsraum zu reinigen. Des Weiteren können auch stoßförmige Gaspulse aus der Öffnung der Plasmaelektrode abgegeben werden, um Kohlenstoffstrukturen aufzubrechen, insbesondere sich an der Plasmaelektrode bildende Baumstrukturen oder Graphitstifte. Ferner kann auch eine Zusammensetzung des wasserstoffenthaltenden Gases zum Reinigen des Reaktionsraums eingestellt werden oder ein anderes Gas, wie zum Beispiel ein Inertgas zum reinigen verwendet werden.

Das aus dem Reaktionsraum abgeführte Gas kann neben dem molekularen Wasserstoff weitere gasförmige Beiprodukte enthalten. Beispielsweise kann auch noch Restgas vom ursprünglich in den Reaktionsraum geleiteten wasserstoffenthaltenden Gas enthalten sein, zum Beispiel nicht umgewandeltes Methan. Es kann auch im aus dem Reaktionsraum abgeführten Gas festes Beiprodukt, zum Beispiel Kohlenstoff, enthalten sein.

In Schritt 510 wird das aus dem Reaktionsraum abgeführte Gas in einem Reservoir gesammelt. Alternativ kann das Gas auch in der Gasableitung gesammelt werden. Schritt 510 ist optional. Alternativ kann das abgeführte Gas auch mit einer im Wesentlichen unveränderten Durchflussrate durch das Reservoir und/oder die Gasableitung strömen.

In Schritt 512 wird das abgeführte Gas in verschiedene Gase getrennt, insbesondere wird der molekulare Wasserstoff von weiteren gasförmigen Beiprodukten getrennt. Schritt 512 ist optional. In diesem Ausführungsbeispiel ist zum Trennen des molekularen Wasserstoffs von den weiteren gasförmigen Beiprodukten ein mehrstufiger Membranprozess und ein selektives Adsorptionsverfahren vorgesehen. In anderen Ausführungsbeispielen kann auch nur ein Membranprozess und/oder nur ein selektives Adsorptionsverfahren vorgesehen sein. Schritt 512 wird in diesem Ausführungsbeispiel im Reservoir durchgeführt. Hierfür sind im Reservoir mehrere hintereinander angeordnete Membranen und ein Adsorber angeordnet. In anderen Ausführungsbeispielen kann das Trennen der unterschiedlichen Gase voneinander auch in der Gasableitung durchgeführt werden. Falls sich noch festes Beiprodukt, zum Beispiel Kohlenstoff, im abgeführten Gas befindet, kann dieser aus dem Gas gefiltert werden, beispielsweise mittels eines Partikelfilters.

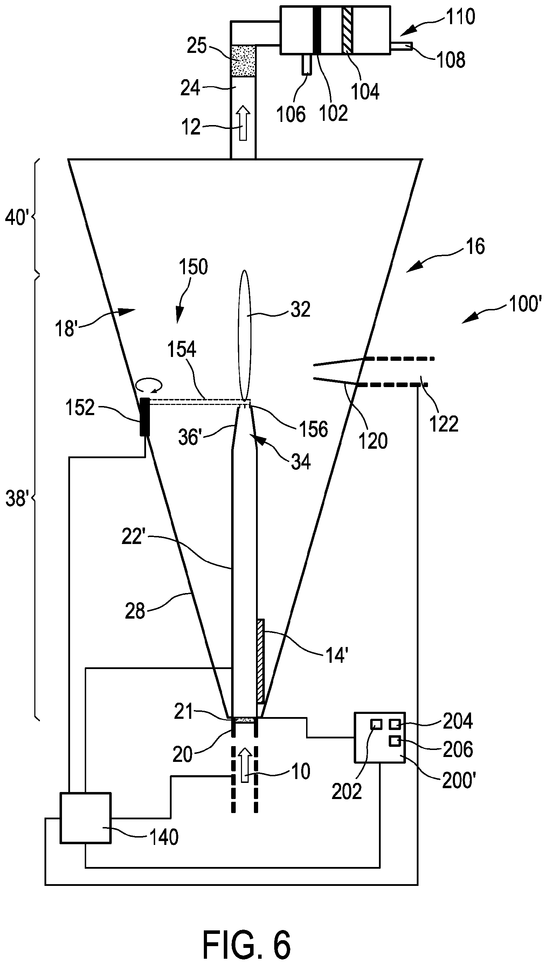

Figur 6 zeigt eine schematische Darstellung eines weiteren Ausführungsbeispiels einer Plasmalysevorrichtung 100' zum koronaentladungsinduzierten Spalten von wasserstoffenthaltenden Gasen 10 in molekularen Wasserstoff 12 und wenigstens ein Beiprodukt. In diesem Ausführungsbeispiel wird im Wesentlichen Methan als wasserstoffenthaltendes Gas 10 verwendet. Die dadurch entstehenden Beiprodukte sind im Wesentlichen Graphitstifte 14' und Kohlenstoffpartikel.

Die Plasmalysevorrichtung 100' ist ähnlich zu der in Fig. 1 gezeigte Plasmalysevorrichtung 100 aufgebaut und hat eine ähnliche Funktionsweise. Die Plasmalysevorrichtung 100' hat ein Gehäuse 16, das einen trichterförmigen Reaktionsraum 18' gasdicht umschließt. Ferner hat die Plasmalysevorrichtung 100' eine Gaszuleitung 20, genau eine Plasmaelektrode 22` und eine Gasableitung 24. In der Gaszuleitung 20 ist ein Partikelfilter 21 angeordnet, um Partikel aus dem wasserstoffenthaltenden Gas 10 zu filtern. In der Gasableitung 24 ist ein Partikelfilter in Form eines Kohlenstoffpartikelfilterschlauchs 25 angeordnet, um die Kohlenstoffpartikel aus dem Gas herauszufiltern, das aus dem Reaktionsraum 18' abgeführt wird.

Ein wesentlicher Unterschied ist, dass sich im Betrieb in der Plasmalysevorrichtung 100' im Gegensatz zur in Fig. 1 gezeigten Plasmalysevorrichtung 100 anstatt festem Beiprodukt in Form von Baumstrukturen (vgl. Fig. 3), an der Spitze der Plasmaelektrode 22` spröde Graphitstifte 14' bilden und sich geringere Mengen an Kohlenstoffpartikeln im Reaktionsraum 18' anlagern. Die Graphitstifte 14' entstehen aufgrund einer höheren Gasdurchflussrate und einem daraus resultierenden stärkeren Gasstrom aus einer Öffnung 34 der Plasmaelektrode 22`. Je stärker der Gasstrom ist, desto weniger Äste einer Baumstruktur können sich ausbilden, so dass bei einem Gasstrom der stark genug ist, gar keine Äste ausgebildet werden und nur ein Stamm bzw. Stift, nämlich Graphitstift 14', gebildet wird. In diesem Ausführungsbeispiel bilden sich ab einer Gasdurchflussrate von mehr als 2 Liter pro Minute (>2 l/min) keine Äste mehr, wobei der Gasstrom in diesem Fall kegelförmig ist. Ferner werden durch den stärkeren Gasstrom auch Kohlenstoffpartikel einfacher aus dem Reaktionsraum 18' heraus in die Gasableitung 24 abgeführt. Die Graphitstifte 14' brechen nach einer gewissen Zeit ab bzw. werden abgebrochen und fallen auf den Boden des Reaktionsraums 18`.

Im Gegensatz zur in Fig. 1 gezeigten Plasmalysevorrichtung 100 wird daher ein Teil des festen Beiprodukts, nämlich die Kohlenstoffpartikel, auch über die Gasableitung 24 abgeführt. Diese können, während eine Koronaentladung 32 stattfindet, mit dem aus der Öffnung 34 der Plasmaelektrode 22' erzeugten Gasstrom in die Gasableitung 24 abgeführt werden. Dort werden die Kohlenstoffpartikel im Kohlenstoffpartikelfilterschlauch 25 gefiltert und somit vom aus dem Reaktionsraum 18' abgeführten Gas abgetrennt.

Ferner können in einem Reinigungsmodus zusätzlich der Graphitstift 14' umgeworfen werden und im Reaktionsraum 18' angelagerte Kohlenstoffpartikel aus dem Reaktionsraum 18' ausgeblasen werden. Hierfür werden aus der Öffnung 34 der Plasmaelektrode 22` stoßförmige Gaspulse abgegeben. Die Plasmaelektrode 22` enthält dafür eine kegelförmige Düse 36`, die über die Öffnung 34 und über den Partikelfilter 21 mit der Gaszuleitung 20 verbunden ist. Dies ermöglicht es sich im Reaktionsraum bildendes festes Beiprodukt, insbesondere Kohlenstoffpartikel aus dem Reaktionsraum 18' einfach zu entfernen.

Um in diesem Ausführungsbeispiel das Erzeugen der stoßförmigen Gaspulse zu steuern, ist eine Steuereinheit 140 vorgesehen. Die Steuereinheit 140 erfasst einen Leistungseintrag in die Plasmalysevorrichtung 100' und unterbricht die Versorgung der Plasmaelektrode 22' mit hochfrequenter Wechselspannung und löst einen stoßförmigen Gaspuls über die Gaszuleitung 20 aus, wenn der Leistungseintrag unter einem Schwellenwert liegt. Der Schwellenwert ist derart gewählt, das er sicherstellt, dass die Öffnung 34 der Plasmaelektrode 22' sich nicht zu stark mit festem Beiprodukt zusetzt. Die Steuereinheit 140 kann dazu mit einer Gaszufuhr der Gaszuleitung 20 verbunden sein, um die Gaszufuhr kurzzeitig zu erhöhen. Es kann zum Beispiel ein von der Steuereinheit steuerbares Ventil in der Gaszuleitung angeordnet sein, um den stoßförmigen Gaspuls zu erzeugen. In anderen Ausführungsbeispielen können stoßförmige Gaspulse auch auf Basis anderer Ereignisse oder zeitabhängig, beispielsweise in regelmäßigen Zeitintervallen erzeugt werden, um festes Beiprodukt aus dem Reaktionsraum 18' abzuführen und insbesondere die Öffnung 34 der Plasmaelektrode 22' von festem Beiprodukt zu befreien.

Während die Kohlenstoffpartikel mit dem Gasstrom in die Gasableitung 24 ausgeblasen werden können, kann der Graphitstift 14' von der Plasmaelektrode 22` auf den Boden des Reaktionsraums 18' fallen. Das in den stoßförmigen Gaspulsen verwendete Gas kann das wasserstoffenthaltende Gas 10 oder ein anderes Gas sein, beispielsweise ein Inertgas.

Die Kohlenstoffpartikel werden mit dem Gasstrom in die Gasableitung 24 geführt, in der sie vom Kohlenstoffpartikelfilterschlauch 25 gefiltert werden. Das restliche Gas wird in ein Reservoir 110 geführt. Im Reservoir 110 sind eine Membran 102 und ein selektiver Adsorber 104 angeordnet. Zudem führen eine Ableitung 106 und eine weitere Gasableitung 108 aus dem Reservoir 110 heraus, die dafür vorgesehen sind getrennten molekularen Wasserstoff und Beiprodukte aus dem Reservoir 110 abzuführen. Membranen und selektive Adsorber können alternativ auch in der Gasableitung der Plasmalysevorrichtung angeordnet sein (nicht gezeigt). Es können auch andere Methoden verwendet werden, um den molekularen Wasserstoff von den Partikeln des festen Beiprodukts zu trennen. Beispielsweise kann auch nur ein Partikelfilter vorgesehen sein oder nur eine Membran.

Im Reservoir 110 werden festes Beiprodukt, das vom Kohlenstoffpartikelfilterschlauch 25 nicht herausgefiltert wurde und gasförmiges Beiprodukt, zum Beispiel nicht umgewandeltes Methan, vom molekularen Wasserstoff aus dem Gasgemisch aus molekularem Wasserstoff und Beiprodukt abgetrennt. Dies erfolgt in diesem Ausführungsbeispiel über einen zweistufigen Prozess mit der Membran 102 und dem selektiven Adsorber 104. Das feste Beiprodukt und Methan können die Membran 102 nicht passieren und werden über die Ableitung 106 abgeführt. Sofern festes Beiprodukt von der Membran 102 aufgenommen wird, kann die Membran 102 ausgetauscht oder gereinigt werden. In diesem Ausführungsbeispiel ist die Membran 102 selbstreinigend. Dafür ist die Membran 102 mit einem Gassammelsystem verbunden (nicht gezeigt). Das Gassammelsystem sammelt Gas und baut so einen Druck auf, der bei Überschreiten eines Druckschwellenwerts in Form eines Gaspulses freigesetzt wird. Der Gaspuls reinigt die Membran 102. Weiteres gasförmiges Beiprodukt wird vom selektiven Adsorber 104 adsorbiert, so dass im Wesentlichen nur molekularer Wasserstoff über die Gasableitung 108 abgeführt wird. In anderen Ausführungsbeispielen kann auch vorgesehen sein ein synthetisches Gas zu erzeugen. Hierfür kann beispielsweise das Methan aus der Gasableitung 106 mit dem molekularen Wasserstoff 12 aus der Gasableitung 108 in einem vordefinierten Gasmischverhältnis zusammengeführt werden. Alternativ können auch die Membran und/oder der Adsorber so gewählt sein, dass ein Gasgemisch aus molekularem Wasserstoff und einem anderen gasförmigen Beiprodukt oder dem Methan erzeugt wird.

In diesem Ausführungsbeispiel wird als Membran eine Polymermembran verwendet. Als Adsorber wird beispielsweise ZSM-5 verwendet. In anderen Ausführungsbeispielen können auch mehrere Membranen und/oder mehrere Adsorber verwendet werden. In anderen Ausführungsbeispielen können auch andere Membranen und/oder Adsorber verwendet werden.

Ferner hat der Reaktionsraum 18' eine andere Form als der Reaktionsraum 18 der in Fig. 1 gezeigten Plasmalysevorrichtung, nämlich eine trichterförmige Form. Somit vergrößert sich ein Querschnitt des Reaktionsraums 18' in Richtung von der Gaszuleitung 20 zur Gasableitung 24. Dies kann ein Anhaften der Kohlenstoffpartikel, die mit dem Gasstrom aus dem Reaktionsraum 18' abgeführt werden, verhindern oder zumindest verringern.

Die Plasmaelektrode 22` ist in diesem Ausführungsbeispiel von unten in das Gehäuse 16 eingeschraubt und kann bei Bedarf, zum Beispiel zum Entfernen von Graphitstiften 14', entfernt werden. Die Graphitstifte 14` können sich im Betrieb der Plasmalysevorrichtung 100' an der Spitze der Plasmaelektrode 22` nahe der Koronaentladung 32 bilden. Der Graphitstift 14' ist leitend und kann temporär einen Teil der Plasmaelektrode 22` bilden. Der Graphitstift 14` ist spröde und bricht daher typischerweise nach gewisser Zeit im Betrieb ab und fällt in Richtung des Bodens des trichterförmigen Reaktionsraums 18`.

Die Plasmaelektrode 22` ist mit einem Hochfrequenzgenerator 200' verbunden. In diesem Ausführungsbeispiel enthält der Hochfrequenzgenerator 200' ein Anpassungsnetzwerk aus zwei Spulen 202, 204 und einem Kondensator 206, um eine Impedanzanpassung durchzuführen. Der Hochfrequenzgenerator 200' stellt in diesem Ausführungsbeispiel eine Leistung zwischen 30 W und 5000 W bereit und hat eine Ausgangsimpedanz von 50 Ohm. Der Hochfrequenzgenerator 200' stellt die hochfrequente Wechselspannung mit einer Frequenz im Bereich von 1 MHz bis 40 MHz, insbesondere im Bereich von 10 MHz bis 20 MHz, zum Beispiel mit einer Frequenz von 13,56 MHz bereit.

Der Reaktionsraum 18 hat in diesem Ausführungsbeispiel eine nicht-geerdete, nicht-metallische Wand 28. In anderen Ausführungsbeispielen kann der Reaktionsraum auch von einer anderen Art von Wand umschlossen sein, die dazu ausgebildet ist die Plasmaelektrode gegenüber einer Außenseite der Wand elektrisch zu isolieren. In diesem Ausführungsbeispiel ist die Wand 28 aus Quarzglas mit einer Wandstärke bzw. Dicke von 4 mm. In anderen Ausführungsbeispielen kann die Wand auch aus einem anderen Material, zum Beispiel aus einer Keramik sein. Die Wand kann auch eine andere Dicke haben.

Ferner enthält die Plasmalysevorrichtung 100' eine in der Wand 28 des Reaktionsraums 18' angeordnete Querdüse 120 zum Reinigen der Plasmaelektrode 22`, zum Umblasen des Graphitstift 14' und um Verwirbelungen zu reduzieren. Die Querdüse 120 ist ein kleines Stück über der Spitze der Plasmaelektrode 22` angeordnet. In anderen Ausführungsbeispielen kann die Querdüse auch an anderer Stelle, zum Beispiel aus dem Boden ragend und in einer anderen Ausrichtung zur Plasmaelektrode angeordnet sein, insbesondere, um die Plasmaelektrode zu Reinigen. Die Querdüse 120 ist mit einer Quergaszuleitung 122 verbunden, die zum Beispiel ein Inertgas oder zusätzliches wasserstoffenthaltendes Gas in den Reaktionsraum 18' einführen kann, um mit einem stoßförmigen Gaspuls die Plasmaelektrode 22` zu reinigen und gegebenenfalls den Graphitstift 14` umzuwerfen, so dass dieser auf den Boden des Reaktionsraums 18' fällt. Die Querdüse 120 und Quergaszuleitung 122 sind optional. Die Gaszufuhr der Querdüse 120 kann von der Steuereinheit 140 gesteuert werden. Alternativ oder zusätzlich, kann die Gaszufuhr der Querdüse auch zeitgesteuert sein und beispielsweise alle 5 Minuten eine Gaspuls in den Reaktionsraum einführen.

Des Weiteren enthält die Plasmalysevorrichtung 100' ein Reinigungselement 150 mit einer verschwenkbaren Achse 152 und einem Stab 154. Der Stab 154 ist mit einem Ende an der verschwenkbaren Achse 152 befestigt und hat am anderen Ende eine in Richtung des Bodens gerichtete Bürste 156. Der Stab 154 kann beispielsweise 40 mm oder länger sein. Die verschwenkbare Achse 152 ist nahe der Wand 28 des Reaktionsraums 18' angeordnet und wird von einem Elektroantrieb angetrieben, um die Achse 152 und somit den Stab 154 zu verschwenken. Der Stab 154 lässt sich so verschwenken, dass die Bürste 156 über die Spitze der Plasmaelektrode 22` gefahren werden kann, um diese zu reinigen und gegebenenfalls dabei zu unterstützen Graphitstifte 14' abzubrechen. In anderen Worten funktioniert das Reinigungselement 150 ähnlich wie ein Scheibenwischer, der über die Spitze der Plasmaelektrode 22' wischt. Beim Überstreichen der Bürste 154 über die Spitze der Plasmaelektrode 22' erlischt die Koronaentladung 32 für einen kurzen Moment. Das Reinigungselement 150 kann von der Steuereinheit 140 gesteuert werden.

In diesem Ausführungsbeispiel ist der Reaktionsraum 18' in eine Hauptkammer 38` und eine Nebenkammer 40` aufgeteilt. Im Gegensatz zur in Fig. 1 gezeigten Plasmalysevorrichtung 100 ist in diesem Fall die Nebenkammer 40' über der Hauptkammer 38` angeordnet. In der Hauptkammer 38' findet die Koronaentladung 32 statt und über die Nebenkammer 40' wird der molekulare Wasserstoff 12, sowie Kohlenstoffpartikel im Gasstrom abgeführt, nämlich in die Gasableitung 24.

In anderen Ausführungsbeispielen kann die Gasableitung auch keinen Partikelfilter, einen anderen oder zusätzlichen Partikelfilter aufweisen, um die Kohlenstoffpartikel aufzunehmen. Der Partikelfilter kann beispielsweise ein druckgesteuerter Partikelfilter sein. Alternativ oder zusätzlich, kann auch eine steuerbare Klappe vorgesehen sein. Die Klappe kann an einer Gabelung der Gasableitung vorgesehen sein, um im Reinigungsmodus, wenn ein stoßförmiger Gaspuls abgegeben wird, mit besonders vielen Kohlenstoffpartikeln belastetes Gas aus dem Reaktionsraum von dem im normalen Betrieb erzeugten molekularen Wasserstoff zu trennen.

Weitere Merkmale, die mit Bezug zur Fig. 1 gezeigten Plasmalysevorrichtung 100 genannt wurden, werden für die Plasmalysevorrichtung 100' nicht noch einmal explizit beschrieben, können aber optional auch vorhanden sein, wie zum Beispiel weitere Reinigungselemente.

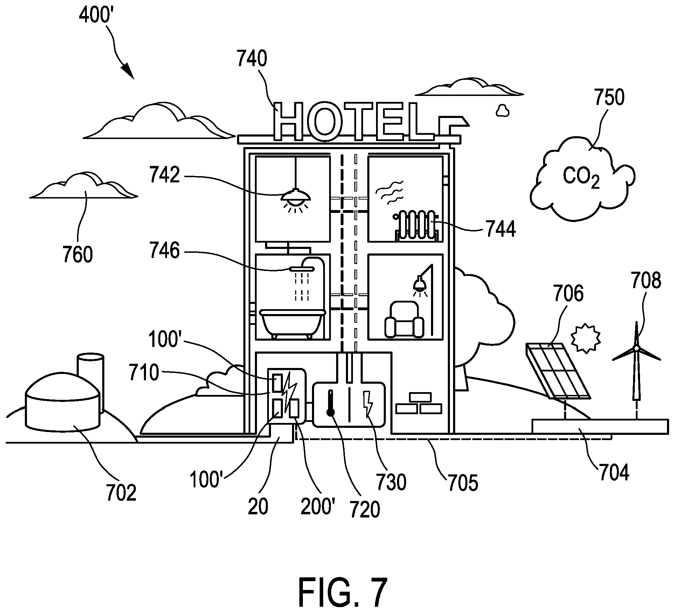

Figur 7 zeigt ein weiteres Ausführungsbeispiel eines Plasmalysesystems 400' zum Spalten von wasserstoffenthaltendem Gas in molekularen Wasserstoff und wenigstens ein Beiprodukt. In diesem Ausführungsbeispiel ist das Plasmalysesystem 400' mit einer Wärmebereitstellungsvorrichtung in Form der Heizung 720 und der Energieversorgung in Form einer Brennstoffzelle 730 eines Gebäudes, insbesondere eines Hotels 740, verbunden. Alternativ können diese auch Teil des Plasmalysesystems 400' sein. Anstatt eines Hotels, kann auch ein anderes Gebäude mit dem Plasmalysesystem verbunden sein oder eine andere ortsfeste oder mobile Struktur. Anstatt einer separaten Wärmebereitstellungsvorrichtung und Energieversorgung, können diese Elemente beispielsweise auch in einem BHKW kombiniert sein.

Das Plasmalysesystem 400' enthält einen Speicher mit wasserstoffenthaltendem Gas in Form eines Biogasreaktors 702, eine Energieanlage 704 und eine Plasmalyseeinheit 710.

Der Biogasreaktor 702 ist zusätzlich mit einem Klärwerk (nicht gezeigt) verbunden und erzeugt aus Abwasser und Abfällen ein wasserstoffenthaltendes Gas in Form von Biogas. Dieses enthält im Wesentlichen Methan.

Die Energieanlage 704 enthält eine Solarenergieanlage 706 und eine Windenergieanlage 708. Die Energieanlage 704 dient zum Bereitstellen von Energie zum koronaentladungsinduzierten Spalten von wasserstoffenthaltenden Gasen in den molekularen Wasserstoff und das wenigstens eine Beiprodukt. In anderen Ausführungsbeispielen kann die Energieanlage auch andere energieerzeugende Anlagen enthalten, beispielsweise zusätzlich oder alternativ ein Wasserkraftwerk enthalten.

Die Plasmalyseinheit 710 enthält zwei Plasmalysevorrichtungen 100` und einem Hochfrequenzgenerator 200`.

Die Plasmalyseeinheit 710 ist über die Gaszuleitung 20 mit dem Biogasreaktor 702 verbunden und über die Stromleitung 705 mit der Energieanlage 704.

Dies ermöglicht es mittels Ökostrom von der Energieanlage 704 und Biogas aus dem Biogasreaktor 702 emissionsfrei Wärme und molekularen Wasserstoff zu erzeugen, die in der Heizung 720 und der Brennstoffzelle 730 des Hotels 740 verwendet werden können. Das Hotel 740 kann somit die Beleuchtung 742, Heizkörper 744 und Warmwasseraufbereitung für die Dusche 746 betreiben ohne umweltschädliches Kohlenstoffdioxid 750 zu erzeugen. Stattdessen wird lediglich festes Beiprodukt beispielsweise in Form von elementarem Kohlenstoff, sowie sauberes Wasser erzeugt, das beispielsweise in Form von Wolken 760 in den Wasserkreislauf zurückgeführt wird.

Alternativ kann der erzeugte molekulare Wasserstoff auch beispielsweise in einem Wasserstoffspeicher gespeichert werden, um ihn später zu verwenden. Zum Beispiel kann das Hotel eine Wasserstofftankstelle bereitstellen, um Fahrzeuge mit Wasserstoff betanken zu können. Es können auch andere mit molekularem Wasserstoff betreibbare Energieanlagen mit dem molekularen Wasserstoff versorgt werden.

In einem Ausführungsbeispiel, kann das Hotel beispielsweise Teil eines Kreuzfahrtschiffs sein. Das Kreuzfahrtschiff kann eine eigene Kläranlage und eine eigene Energieanlage aufweisen, die wasserstoffenthaltendes Gas und Energie zum Betreiben der Plasmalysevorrichtungen bereitstellen können. In weiteren Ausführungsbeispielen können auch Plasmalysevorrichtungen in anderen Fahrzeugen, wie Personenkraftwagen, Lastkraftwagen, Eisenbahnantriebswagen, oder Flugzeugen, beispielsweise Flüssiggasflugzeugen oder mit synthetischem Gas betriebenen Flugzeugen verwendet werden. In Flugzeugen, kann beispielsweise Kerosin, JP-8 oder ein anderer konventioneller Treibstoff in Kohlenstoff und Flüssiggas (LPG, engl. Liquified Petroleum Gas) oder synthetisches Gas umgewandelt werden und dieses zum Betreiben des Flugzeugs verwendet werden. Dies kann dies Kohlenstoffdioxidemission des Verkehrs senken ohne die bestehende Infrastruktur weitgehend ersetzen zu müssen.

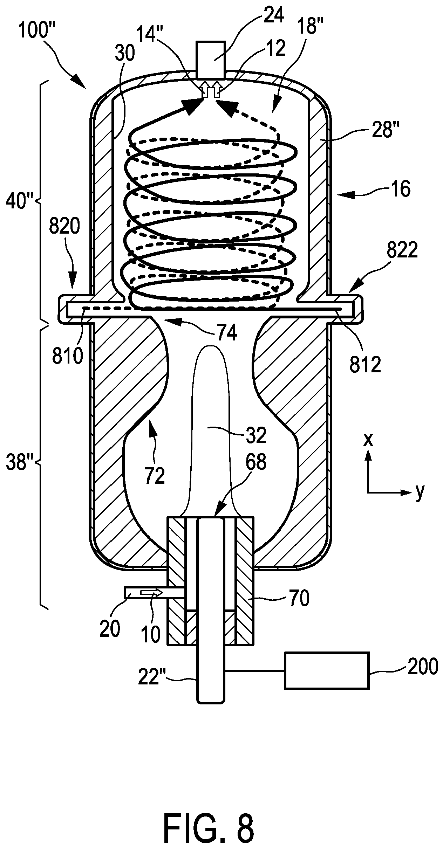

Figur 8 zeigt eine schematische Darstellung eines weiteren Ausführungsbeispiels einer Plasmalysevorrichtung 100" zum koronaentladungsinduzierten Spalten von wasserstoffenthaltenden Gasen 10 in molekularen Wasserstoff 12 und wenigstens ein Beiprodukt 14" oder zum Herstellen von molekularem Wasserstoff 12 und wenigstens einem Beiprodukt 14". Die Plasmalysevorrichtung 100" hat eine ähnliche Funktionsweise wie die anderen Plasmalysevorrichtungen 100 und 100`.

Die Plasmalysevorrichtung 100" kann beispielsweise verwendet werden, um den molekularen Wasserstoff 12 und das wenigstens eine Beiprodukt 14" kontinuierlich herzustellen. Hierzu wird der Plasmalysevorrichtung 100" wasserstoffenthaltendes Gas 10 kontinuierlich zugeführt. Das wasserstoffenthaltende Gas 10 wird in einem Plasma gespalten, das von einer Koronaentladung 32 erzeugt wird. Die Atome und Moleküle, die aus dem Spalten des wasserstoffenthaltenden Gases 10 erzeugt werden, kombinieren zu neuen Molekülen und bilden molekularen Wasserstoff 12 und das wenigstens eine Beiprodukt 14". Der molekulare Wasserstoff 12 und/oder das wenigstens eine Beiprodukt 14" können wiederum zum Herstellen von Folgeprodukten verwendet werden. Es kann beispielsweise ein Syntheseschritt erfolgen, um die Folgeprodukte zu erzeugen. In diesem Ausführungsbeispiel liegt eines der Beiprodukte 14" in Form von kleinen Partikeln vor, die mit dem Gasstrom des aus der Koronaentladung 32 entstehenden Gasgemischs aus dem Reaktionsraum herausgetragen wird. Ein weiteres der Beiprodukte 14" ist ein gasförmiges Beiprodukt.

Die Plasmalysevorrichtung 100" hat ein Gehäuse 16, einen gasdichten Reaktionsraum 18", eine Gaszuleitung 20 für das wasserstoffenthaltende Gas 10, zwei weitere Gaszuleitungen 820 und 822 für weitere Gase 810 und 812, genau eine Plasmaelektrode 22" zum Erzeugen von Koronaentladungen 32 im Reaktionsraum 18" mittels einer hochfrequenten Wechselspannung, sowie eine Gasableitung 24. Die Plasmaelektrode 22" ist mit einem Hochfrequenzgenerator 200 verbunden, der die Plasmaelektrode 22" mit der hochfrequenten Wechselspannung versorgt. Die Gasableitung 24 führt den molekularen Wasserstoff 12 und die Beiprodukte 14" aus dem Reaktionsraum 18" ab.

Die Plasmaelektrode 22" ist in diesem Ausführungsbeispiel aus Graphit. Zudem hat die Plasmaelektrode 22" ein flaches Ende 68 zum Erzeugen der Koronaentladungen 32 im Reaktionsraum 18". Während des Betriebs der Plasmalysevorrichtung 100" lösen sich Kohlenstoffatome von der Plasmaelektrode 22" ab und werden mit dem Gasstrom aus dem Reaktionsraum 18" abgeführt. Pro kWh können sich beispielsweise 1 bis 2 g Kohlenstoff von der Plasmaelektrode 22" ablösen. Somit verkürzt sich die Plasmalektrode 22" über die Zeit. Damit das flache Ende 68 der Plasmaelektrode 22" seine Position innerhalb des Reaktionsraums 18" nicht mit der Zeit ändert, kann die Plasmaelektrode 22" nachgeschoben werden, beispielsweise kontinuierlich. Alternativ, kann die Plasmaelektrode 22" auch nach einer bestimmten Betriebsdauer oder wenn eine bestimmte Menge Kohlenstoff abgelöst ist, ausgewechselt werden. Die Plasmaelektrode 22" kann auch verschoben werden, um die Position der Koronaentladung 32 und somit des Plasmas zu verändern. Dies ermöglicht es zum Beispiel einen heißesten Punkt des Plasmas, der sich an dessen Ende befindet, entlang des Reaktionsraums 18" an eine bestimmte axiale Position zu verschieben.

Das Gehäuse 16 hat eine Wand 28", die den Reaktionsraum 18" gasdicht umschließt. In diesem Ausführungsbeispiel ist das Gehäuse 16 aus Graphit. Ein Teil der Wand 28" des Reaktionsraums 18" ist von einem Isolator 70 gebildet. Der Isolator 70 ist um die Plasmaelektrode 22" herum an einem Übergang vom Reaktionsraum 18" zu einer äußeren Umgebung des Reaktionsraums 18" angeordnet. Der Isolator 70 umschließt die Plasmaelektrode 22" so, dass der Reaktionsraum 22" gasdicht ist. Hierfür kann eine Dichtung zwischen dem Isolator und der Plasmaelektrode vorgesehen sein. Die Dichtung kann auch von dem Isolator und der Plasmaelektrode selbst erzeugt werden, indem diese entsprechend bündig abschließen. Alternativ oder zusätzlich kann die Plasmaelektrode auch unterschiedliche Durchmesser entlang einer axialen Achse haben, so dass die Plasmaelektrode innerhalb des Reaktionsraums einen geringeren Durchmesser hat als außerhalb. Der Isolator 70 isoliert die Plasmaelektrode 22" elektrisch gegenüber einer Außenseite der Wand 28". In diesem Ausführungsbeispiel isoliert der Isolator 70 zudem die Plasmaelektrode 22" elektrisch von dem übrigen Teil der Wand 28". Der Isolator 70 ist in diesem Ausführungsbeispiel aus Aluminiumoxid. Alternativ kann der Isolator auch von einer oder mehreren anderen Keramiken, beispielsweise, Hochtemperaturkeramiken, gebildet sein.

Die Gaszuleitung 20 ist derart angeordnet, dass das wasserstoffenthaltende Gas 10 entlang einer Oberfläche der Plasmaelektrode 22" in Richtung der Koronaentladung 32 strömt. Die Gaszuleitung 20 führt durch eine Öffnung in der Wand 28" des Reaktionsraums 18" in den Isolator 70, so dass das wasserstoffenthaltende Gas 10 parallel zur Plasmaelektrode entlang deren Außenoberfläche in Richtung der Koronaentladung 32 strömt. Dies ermöglicht es das von der Koronaentladung 32 erzeugte Plasma in Richtung der Gasableitung 24 zu schieben.

Der Reaktionsraum 18" ist in eine Hauptkammer 38" und eine Nebenkammer 40" aufgeteilt. In der Hauptkammer 38" zündet die Koronaentladung. Die Nebenkammer 40" ist in Strömungsrichtung hinter der Hauptkammer 38" angeordnet, so dass Partikel, die durch die Koronaentladung 32 erzeugt werden, in die Nebenkammer 40" strömen können.

In diesem Ausführungsbeispiel sind die weiteren Gaszuleitungen 820 und 822 so angeordnet, dass sie die weiteren Gase 810 und 812 in die Nebenkammer 40" so einführen, dass eine Wirbelströmung bzw. eine zyklonartige Strömung innerhalb der Nebenkammer 40" erzeugt wird. Diese kann dabei unterstützen das von der Koronaentladung 32 erzeugte Gasgemisch sowie feste Partikel aus dem Reaktionsraum 18" in die Gasableitung 24 abzuführen. Alternativ oder zusätzlich, kann die Nebenkammer 40" für Syntheseschritte verwendet werden. Welche Syntheseschritte durchgeführt werden können, hängt davon ab, welche weiteren Gase 810 und 812 über die weiteren Gaszuleitungen 820 und 822 neben dem wasserstoffenthaltenden Gas 10 in den Reaktionsraum 18" eingeführt werden.

Zudem enthält der Reaktionsraum 18" zwischen der Gaszuleitung 20 und der Gasableitung 24 eine Verjüngung 72 und eine daran in Strömungsrichtung nachfolgend angeschlossene Erweiterung 74 des Reaktionsraums 18", die zusammen eine Lavaldüse bilden. Durch die Verjüngung 72 wird ein Querschnitt des Reaktionsraums 18" verringert und durch die Erweiterung 74 wird der Querschnitt des Reaktionsraums 18" wieder vergrößert. Die Lavaldüse dient dazu eine Düsenströmung zu erzeugen, die eine Strömungsgeschwindigkeit innerhalb des Reaktionsraums 18" erhöht, so dass das von der Koronaentladung 32 erzeugte Gasgemisch in Richtung der Gasableitung 24 beschleunigt wird. Es können beispielsweise Strömungsgeschwindigkeiten zwischen 12 und 14 m/s erreicht werden. Dies kann es ermöglichen sicherzustellen, dass sich keine festen Partikel an der Innenseite 30 der Wand 28" in der Hauptkammer 38" absetzen und diese verunreinigen.

In diesem Ausführungsbeispiel sind die weiteren Gaszuleitungen 820 und 822 nahe dem Ende der Lavaldüse angeordnet. In anderen Ausführungsbeispielen können die Gaszuleitungen auch an anderen Stellen entlang des Reaktionsraums 22" angeordnet sein. Beispielsweise können die Gaszuleitungen 820 und 822 auch derart angeordnet sein, dass sie die Plasmaelektrode reinigen können oder weitere Gase direkt in die Koronaentladung einführen.

Des Weiteren ist in diesem Ausführungsbeispiel die Plasmaelektrode 22" relativ zu der Verjüngung 72 und der Erweiterung 74 so angeordnet, dass sich das Ende des Plasmas, das von der Koronaentladung 32 erzeugt wird an oder nahe des geringsten Querschnitts des Reaktionsraums 18" befindet. Das Ende des Plasmas ist der heißeste Punkt, so dass hier ein zusätzlicher Energieeintrag zum Spalten von Molekülen erzeugt wird. Das Plasma kann auch beispielsweise auf Höhe der weiteren Gaszuleitungen 820 und 822 enden (nicht gezeigt). Die Position des Plasmas und somit auch des Endes des Plasmas kann auch während des Betriebs geändert werden bzw. sich ändern, wenn sich die Position des flachen Endes 68 der Plasmaelektrode 22" ändert, beispielsweise, weil sich Kohlenstoffatome ablösen oder weil die Plasmaelektrode 22" verschoben wird.

Das wasserstoffenthaltende Gas 10 ist in diesem Ausführungsbeispiel Wasserstoff. Das über die Gaszuleitung 820 in den Reaktionsraum 18" eingeführte weitere Gas 810 ist in diesem Fall auch Wasserstoff und das über die weitere Gaszuleitung 822 in den Reaktionsraum 18" eingeführte weitere Gas 812 ist in diesem Fall Methan. Die Gase 10, 810 und 812 können mit unterschiedlichen Durchflussraten in den Reaktionsraum 18" eingeführt werden. Dies kann es ermöglichen die Zusammensetzung des in der Koronaentladung 32 erzeugten Gasgemischs zu beeinflussen. In diesem Fall wird ein Wasserstoffplasma erzeugt, das höhere Temperaturen erreichen kann. In anderen Ausführungsbeispielen kann das Methan über eine der weiteren Gaszuleitungen in das Plasma geführt werden und so unmittelbar gespalten werden. Dies kann es ermöglichen die Zusammensetzung des hergestellten Gasgemischs zu ändern. Alternativ kann auch ein anderes wasserstoffenthaltendes Gas 10 über die Gaszuleitung 20 in den Reaktionsraum 18" eingeführt werden. Auch die der Wasserstoff und das Methan in den weiteren Gasen 810 und 812 kann durch andere Gase ersetzt werden. Weitere Komponenten zur Analyse, wie Analysevorrichtungen können vor, in oder hinter den Gaszuleitungen und der Gasableitung vorgesehen sein (nicht gezeigt). Diese können das in den Reaktionsraum 18" eingeführte und aus dem Reaktionsraum 18" abgeführte Gasgemisch analysieren. Eine Steuerungseinheit (nicht gezeigt) kann die Parameter der Plasmalysevorrichtung 100" einstellen, insbesondere auf Basis der Analyse der Zusammensetzungen des in den Reaktionsraum 18" eingeführten und des aus dem Reaktionsraum 18" abgeführten Gasgemischs. Die Parameter der Plasmalysevorrichtung 100" können beispielsweise für die Herstellung von bestimmten Beiprodukten oder eine hohe Wasserstoffausbeute eingestellt werden. Zudem können auch Gastrennungsverfahren verwendet werden, um das Gasegemisch, das über die Gasableitung 24 abgeführt wird zu trennen. Es können auch Filter, beispielsweise in den Gaszuleitungen und der Gasableitung vorgesehen sein, um Partikel zu filtern. Des Weiteren können auch Gastrennungsverfahren verwendet werden, um ein eingeführtes Gasgemisch mit einer hohen Reinheit bereitzustellen. Ferner können auf Basis des molekularen Wasserstoffs 10 und/oder eines oder mehrere der Beiprodukte 14" auch Folgeprodukte in weiteren Syntheseschritten oder anderen Verarbeitungs- oder Verwertungsschritten hergestellt werden.

Zusammenfassend betrifft die Erfindung das koronaentladungsinduzierte Spalten von wasserstoffenthaltenden Gasen in molekularen Wasserstoff und wenigstens ein Beiprodukt oder das Herstellen von molekularem Wasserstoff und wenigstens ein Beiprodukt oder das Herstellen von Folgeprodukten aus dem molekularen Wasserstoff und/oder dem wenigstens einem Beiprodukt. Hierfür wird wasserstoffenthaltendes Gas über eine Gaszuleitung in einen gasdichten Reaktionsraum mit genau einer Plasmaelektrode eingeführt. Der gasdichte Reaktionsraum ist von einer Wand umschlossen, die ausgebildet ist die Plasmaelektrode gegenüber einer Außenseite der Wand elektrisch zu isolieren. Die Plasmaelektrode ist mit einem Hochfrequenzgenerator verbunden, der hochfrequente Wechselspannung bereitstellt und erzeugt Koronaentladungen im Reaktionsraum mittels der hochfrequenten Wechselspannung. Hierdurch wird das wasserstoffenthaltende Gas in molekularen Wasserstoff und wenigstens ein Beiprodukt gespalten. Der molekulare Wasserstoff wird aus dem Reaktionsraum mittels einer Gasableitung abgeführt. Das wasserstoffenthaltende Gas kann beispielsweise Methan, Biogas, Erdgas, Schwefelwasserstoff oder in den gasförmigen Aggregatzustand überführtes Cyclohexan, Heptan, Toluol, Benzin, JP-8 oder Diesel enthalten.

## Patentansprüche

1. Plasmalysevorrichtung (100; 100'; 100") zum koronaentladungsinduzierten Spalten von wasserstoffenthaltenden Gasen (10) in molekularen Wasserstoff (12) und wenigstens ein Beiprodukt (14; 14`; 14") oder zum Herstellen von molekularem Wasserstoff (12) und wenigstens einem Beiprodukt (14; 14'; 14"), enthaltend:
- einen gasdichten Reaktionsraum (18; 18'; 18"),
- eine Gaszuleitung (20) für das wasserstoffenthaltende Gas (10) in den Reaktionsraum (18; 18'; 18"),
- genau eine Plasmaelektrode (22; 22`; 22") zum Erzeugen von Koronaentladungen (32) im Reaktionsraum (18; 18`; 18") mittels einer hochfrequenten Wechselspannung,
- eine Gasableitung (24) für den molekularen Wasserstoff (12) aus dem Reaktionsraum (18; 18'; 18") und
- eine Ableitung für wenigstens ein festes Beiprodukt aus dem Reaktionsraum,
wobei der gasdichte Reaktionsraum (18; 18'; 18") von einer Wand (28; 28") umschlossen ist, die ausgebildet ist die Plasmaelektrode (22; 22`; 22") gegenüber einer Außenseite der Wand (28) elektrisch zu isolieren, und
wobei die Plasmaelektrode (22; 22`; 22") mit einem Hochfrequenzgenerator (200) zum Erzeugen der hochfrequenten Wechselspannung verbunden ist.

2. Plasmalysevorrichtung (100; 100') gemäß Anspruch 1, wobei der Reaktionsraum (18; 18`) ein Reinigungselement (44, 46; 120, 150) zum Entfernen von festem Beiprodukt (14; 14`) aufweist.

3. Plasmalysevorrichtung (100; 100') gemäß einem der Ansprüche 1 oder 2, wobei der Reaktionsraum eine Hauptkammer und eine Nebenkammer aufweist und die Plasmaelektrode relativ zur Hauptkammer derart angeordnet ist, dass die Koronaentladung in der Hauptkammer zündet, wobei insbesondere die Nebenkammer unterhalb oder oberhalb der Hauptkammer angeordnet ist.

4. Plasmalysevorrichtung gemäß einem der vorstehenden Ansprüche, wobei die Nebenkammer und/oder die Ableitung eine Abführeinrichtung aufweisen, die ausgebildet ist festes Beiprodukt aus dem Reaktionsraum derart abzuführen, dass kein Gas über diese in den Reaktionsraum eindringen kann.

5. Plasmalysevorrichtung gemäß einem der vorstehenden Ansprüche aufweisend eine oder mehrere Membranen und/oder einen oder mehrere Adsorber aufweisen, um gasförmiges Beiprodukt aus einem Gasstrom der Gasableitung für den molekularen Wasserstoff herauszufiltern.

6. Plasmalysevorrichtung gemäß einem der vorstehenden Ansprüche aufweisend ein Reservoir, das insbesondere mit der Gasableitung für den molekularen Wasserstoff verbunden ist.

7. Plasmalysesystem (400; 400`) zum koronaentladungsinduzierten Spalten von wasserstoffenthaltenden Gasen (10) in molekularen Wasserstoff (12) und wenigstens ein Beiprodukt (14; 14`) oder zum Herstellen von molekularem Wasserstoff (12) und wenigstens einem Beiprodukt (14; 14`), enthaltend wenigstens zwei Plasmalysevorrichtungen (100; 100') gemäß einem der Ansprüche 1 bis 6, wobei die Plasmalysevorrichtungen (100; 100') parallel oder in Reihe zueinander angeordnet sind.

8. Plasmalysesystem (400; 400`) gemäß Anspruch 7, das
- einen Speicher mit einem Stoff, aus dem wasserstoffenthaltendes Gas (10) erzeugbar ist, und/oder
- einen Speicher (702) mit wasserstoffenthaltendem Gas (10), und/oder
- eine Energieanlage (704) zum Bereitstellen von Energie zum koronaentladungsinduzierten Spalten von wasserstoffenthaltenden Gasen (10) in den molekularen Wasserstoff (12) und das wenigstens eine Beiprodukt (14), und/oder
- einen Wasserstoffspeicher zum Speichern des molekularen Wasserstoffs (12), und/oder
- einen mit molekularem Wasserstoff (12) betreibbaren Antrieb, und/oder
- eine mit molekularem Wasserstoff (12) betreibbare Energieanlage aufweist.

9. Verwendung einer Plasmalysevorrichtung (100; 100') gemäß einem der Ansprüche 1 bis 6 zum Spalten von wasserstoffenthaltendem Gas (10) in molekularen Wasserstoff (12) und wenigstens ein Beiprodukt (14; 14`) oder zum Herstellen von molekularem Wasserstoff (12) und wenigstens einem Beiprodukt (14; 14`) unter Nutzung von in einem Betrieb einer ortsfesten Struktur (702) oder einer mobilen Struktur bereitgestellten wasserstoffenthaltendem Gas (10).

10. Verwendung des von der Plasmalysevorrichtung (100; 100'; 100") gemäß einem der Ansprüche 1 bis 6 hergestellten molekularen Wasserstoffs (12) und/oder des wenigstens einen Beiprodukts (14; 14`; 14") zum Herstellen von Folgeprodukten.

11. Verwendung von in einer Plasmalysevorrichtung gemäß Anspruch 1 bis 6 hergestellten molekularem Wasserstoff für die folgenden Anwendungen:
- als Brennstoff,
- zur Herstellung eines Wasserstoffverbrennungsprodukts,
- als Antriebsmittel,
- zum Betreiben eines wasserstoffbetriebenen Fahrzeug,
- zum Mischen mit Flüssiggas,
- zum Mischen mit Flüssigerdgas,
- zum Mischen mit flüssigem Biomethan,
- zum Mischen mit Erdgas,
- zum Mischen mit Methan,
- zum Herstellen von Synthesegas,
- zum Herstellen von synthetischem Kraftstoff,
- zum Herstellen von Ammoniak,
- zum Raffinieren von Erdöl,
- zum Hydrieren von chemischen Verbindungen,
- zum Betreiben einer Wasserstoffturbine,
- zum Betreiben einer Brennstoffzelle,
- zum Betreiben einer Kraft-Wärme-Kopplung,
- zum Betreiben eines Blockheizkraftwerks,
- zum Erzeugen von Energie mittels einer Brennstoffzelle,
- zum Erzeugen von Energie und/oder Wärme mittels einer Kraft-Wärme-Kopplung,
- in einer Gasseparationsanlage,
- in einer Gaskompressionsanlage,
- zum Herstellen von synthetischen Rohmaterialien,
- zum Speichern von Energie,
- zum Erzeugen von Wärme,
- zum Erzeugen von Energie.

12. Verwendung von in einer Plasmalysevorrichtung gemäß Anspruch 1 bis 6 hergestelltem Beiprodukt für die folgenden Anwendungen:
- als Reduktionsmittel bei der Herstellung von Stahl,
- als Brennstoff,
- als Adsorptionsmittel,
- als Trägermaterial von Katalysatoren für heterogene Katalyse,
- als Grundmaterial zur Herstellung von Kohlenstoffstrukturen,
- als Additiv für die Herstellung von Asphalt,
- als Additiv für die Herstellung von Zement,
- als Additiv für die Herstellung von Beton,
- als Inhaltsstoff eines Wärmeleitmittels,
- als Aktivkohle zur Abwasserreinigung,
- als Futtermittelzusatz,
- als Additiv zu einem Binder,
- als Additiv zur Erde zum verbesserten Speicherung von Nährstoffen,
- als Kohle zur Extraktion von Phosphor und anderen chemischen Grundstoffen im Klärschlamm,
- als Additiv in Baustoffen,
- als Additiv in Kunststoffen,
- zur Dämmung,
- zur Filtration,
- zur Verpackung,
- für den Leichtbau.

13. Verfahren (500) zum koronaentladungsinduzierten Spalten von wasserstoffenthaltenden Gasen (10) in molekularen Wasserstoff (12) und wenigstens ein Beiprodukt (14; 14`) oder
zum Herstellen von molekularem Wasserstoff (12) und wenigstens einem Beiprodukt (14; 14`) oder
zum Herstellen von Folgeprodukten aus dem molekularen Wasserstoff (12) und/oder dem wenigstens einem Beiprodukt (14; 14`),
umfassend die Verfahrensschritte,
- Einführen (502) eines wasserstoffenthaltenden Gases (10) in einen gasdichten Reaktionsraum (18; 18`),
- Erzeugen (504) einer Koronaentladung (32) mittels genau einer mit einer hochfrequenten Wechselspannung betriebenen Plasmaelektrode (22; 22`) im Reaktionsraum (18; 18`), wobei der gasdichte Reaktionsraum (18; 18`) von einer Wand (28) umschlossen ist, die ausgebildet ist die Plasmaelektrode (22; 22`) gegenüber einer Außenseite der Wand (28) elektrisch zu isolieren,
wobei durch die Koronaentladung molekularer Wasserstoff (12) und das wenigstens eine Beiprodukt (14; 14`) erzeugt werden.

14. Verwendung des molekularen Wasserstoffs herstellbar oder hergestellt gemäß dem Verfahren gemäß Anspruch 13 für eine der folgenden Anwendungen:
- als Brennstoff,
- zur Herstellung eines Wasserstoffverbrennungsprodukts,
- als Antriebsmittel,
- zum Betreiben eines wasserstoffbetriebenen Fahrzeug,
- zum Mischen mit Flüssiggas,
- zum Mischen mit Flüssigerdgas,
- zum Mischen mit flüssigem Biomethan,
- zum Mischen mit Erdgas,
- zum Mischen mit Methan,
- zum Herstellen von Synthesegas,
- zum Herstellen von synthetischem Kraftstoff,
- zum Herstellen von Ammoniak,
- zum Raffinieren von Erdöl,
- zum Hydrieren von chemischen Verbindungen,
- zum Betreiben einer Wasserstoffturbine,
- zum Betreiben einer Brennstoffzelle,
- zum Betreiben einer Kraft-Wärme-Kopplung,
- zum Betreiben eines Blockheizkraftwerks,
- zum Erzeugen von Energie mittels einer Brennstoffzelle,
- zum Erzeugen von Energie und/oder Wärme mittels einer Kraft-Wärme-Kopplung,
- in einer Gasseparationsanlage,
- in einer Gaskompressionsanlage,
- zum Herstellen von synthetischen Rohmaterialien,
- zum Speichern von Energie,
- zum Erzeugen von Wärme,
- zum Erzeugen von Energie.

15. Verwendung des wenigstens einen Beiprodukts herstellbar oder hergestellt gemäß dem Verfahren gemäß Anspruch 13 für eine der folgenden Anwendungen:
- als Reduktionsmittel bei der Herstellung von Stahl,
- als Brennstoff,
- als Adsorptionsmittel,
- als Trägermaterial von Katalysatoren für heterogene Katalyse,
- als Grundmaterial zur Herstellung von Kohlenstoffstrukturen,
- als Additiv für die Herstellung von Asphalt,
- als Additiv für die Herstellung von Zement,
- als Additiv für die Herstellung von Beton,
- als Inhaltsstoff eines Wärmeleitmittels,
- als Aktivkohle zur Abwasserreinigung,
- als Futtermittelzusatz,
- als Additiv zu einem Binder,
- als Additiv zur Erde zum verbesserten Speicherung von Nährstoffen,
- als Kohle zur Extraktion von Phosphor und anderen chemischen Grundstoffen im Klärschlamm,
- als Additiv in Baustoffen,
- als Additiv in Kunststoffen,
- zur Dämmung,
- zur Filtration,
- zur Verpackung,
- für den Leichtbau.
